(19) Europäisches Patentamt / European Patent Office / Office européen des brevets

(11) **EP 3 661 711 B1**

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(21) Anmeldenummer: **18743839.5**

(22) Anmeldetag: **31.07.2018**

(51) Int Cl.:
**B29B 15/12** *(2006.01)*

(86) Internationale Anmeldenummer:
**PCT/EP2018/070727**

(87) Internationale Veröffentlichungsnummer:
**WO 2019/025439 (07.02.2019 Gazette 2019/06)**

(54) **VORRICHTUNG ZUR IMPRÄGNIERUNG VON FASERN MIT DEFINIERTEM FASERVOLUMENGEHALT**

DEVICE FOR THE IMPREGNATION OF FIBRES HAVING A DEFINED FIBRE VOLUME CONTENT

DISPOSITIF D'IMPRÉGNATION DES FIBRES À TENEUR VOLUMIQUE EN FIBRE DÉFINIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2017 EP 17184104**
**28.05.2018 EP 18174485**

(43) Veröffentlichungstag der Anmeldung:
**10.06.2020 Patentblatt 2020/24**

(73) Patentinhaber: **BASF SE**
**67056 Ludwigshafen am Rhein (DE)**

(72) Erfinder:
• **MEYER, Andre**
**49448 Lemfoerde (DE)**
• **EMGE, Andreas**
**49448 Lemfoerde (DE)**
• **HASENPATT, Michael**
**49448 Lemfoerde (DE)**

(56) Entgegenhaltungen:
**EP-A1- 0 415 517      WO-A1-01/96077**
**WO-A1-2017/053251      US-A- 3 231 414**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung geht aus von einer Vorrichtung zur Imprägnierung von Fasern mit einem Matrixmaterial, umfassend eine Einheit zum Tränken der Fasern mit dem Matrixmaterial.

Durch die Imprägnierung von Fasern werden Faserbundmaterialien hergestellt. In einem Bad imprägnierte Fasern können eingesetzt werden, um Bauteile im Nasswickelverfahren, beispielsweise Rohre, Masten oder Tanks, herzustellen. Eine solche Vorrichtung erlaubt ein kontinuierliches Imprägnieren der Fasern, die dann nach dem Tränken unmittelbar weiterverarbeitet werden können. Üblicherweise werden bei den Nasswickelverfahren die getränkten Fasern zum Endprodukt gewickelt, bevor das Matrixmaterial ausgehärtet oder erstarrt ist. Nach dem Wickeln erfolgt dann das Aushärten oder Erstarren des Matrixmaterials zum fertigen Endprodukt.

Um Fasern zu tränken, sind unterschiedliche Verfahren bekannt, wobei in der Regel ein Bad eingesetzt wird, durch das die Fasern geführt werden.

So ist zum Beispiel aus der US 2,433,965 bekannt, Endlosfasern durch ein Bad zu leiten, indem die Fasern von oben in das Bad eintauchen und um Rollen innerhalb des Bades geführt werden. Nach dem Verlassen des Bades werden die so getränkten Fasern durch ein Walzenpaar geführt, in dem überschüssiges Matrixmaterial ausgepresst wird. Hierzu befinden sich die Walzenpaare oberhalb der Badoberfläche, damit das abgeschiedene Matrixmaterial zurück in das Bad fließt.

Eine Vorrichtung zur Herstellung eines gewickelten Produkts ist aus US 4,267,007 bekannt. Hier werden die Fasern vor dem Wickelprozess ebenfalls in einem Bad mit dem Matrixmaterial getränkt. Hierzu werden die Fasern um eine Rolle innerhalb des Bades geleitet. Danach werden die getränkten Fasern über eine Platte geleitet und mit einem Block auf die Platte gedrückt, um überschüssiges Matrixmaterial auszupressen.

Alle Verfahren, bei denen die Faserstruktur durch ein Bad geleitet wird, haben jedoch den Nachteil, dass aufgrund des üblicherweise offenen Bades die Viskosität des Matrixmaterials mit der Zeit ändert, entweder aufgrund von Verdunstung oder in Abhängigkeit vom eingesetzten Matrixmaterial auch durch chemische Reaktion aufgrund des Kontaktes mit Luftfeuchtigkeit. Zudem ist es bei jedem Anfahren, zum Beispiel nach einer Reinigung, notwendig, die Fasern wieder mühsam einzufädeln. Die Befüllung des Bades kann erst erfolgen, wenn die Fasern bereits eingelegt worden sind.

Um insbesondere zu vermeiden, dass sich die Viskosität des Matrixmaterials ändert, sind Verfahren und Vorrichtungen bekannt, bei denen die Fasern durch einen Spalt geführt werden, in dem die Imprägnierung erfolgt. Eine solche Vorrichtung ist zum Beispiel aus US 4,937,028, US 5,766,357 oder aus WO-A 2007/062516 sowie aus A. Miaris et al., "Modeling the Impregnation Process of a Siphon Impregnation System during Filament Winding", Proceedings of the ASME 2011 Pressure Vessels and Piping Division Conference, PVP2011, July 2011, bekannt. Diese Verfahren haben jedoch insbesondere den Nachteil, dass aufgrund der geringen Größe der Imprägniereinrichtung das Matrixmaterial kontinuierlich und sehr präzise nachgeführt werden muss, um eine gleichmäßige Imprägnierung zu erhalten.

Aus US 5,747,075 ist ein Pultrusionsverfahren bekannt, bei dem die Fasern durch Kanäle geführt werden, in die über einen Verteiler Matrixmaterial zum Tränken eingepumpt wird.

US 5,084,305 beschreibt ein Tränkungsverfahren, bei dem die Fasern über Stege geführt werden, in denen jeweils Düsen ausgebildet sind, durch die das Matrixmaterial auf die Fasern appliziert wird. Eine gleichmäßige Imprägnierung wird bei diesem System erreicht, indem die Fasern einmal über einen Steg und einmal unter einem Steg entlanggeführt werden.

Auch bei diesen Verfahren ist eine kontinuierliche und insbesondere gleichmäßige Zufuhr des Matrixmaterials erforderlich, um gleichmäßig imprägnierte Fasern zu erhalten.

Eine weitere Möglichkeit zur Imprägnierung von Fasern ist aus US 7,413,623 bekannt. Hier werden die Fasern um mehrere Walzen geführt und die Zugabe des Matrixmaterials erfolgt aus einem Vorratsbehälter, der oberhalb der Walzen angeordnet ist und aus dem das Matrixmaterial einem Walzenspalt zugeführt wird, durch den sich die Fasern von oben nach unten bewegen. Hier ist insbesondere nachteilig, dass überschüssiges Matrixmaterial durch die Walzen nach unten abläuft und nicht rezykliert werden kann. Zusätzlich besteht die Gefahr, dass sich Matrixmaterial auf den Walzen ablagert und auf der Walzenoberfläche aushärtet, was zu notwendigen zusätzlichen und aufwendigen Reinigungsprozessen führt.

Ein weiterer Nachteil bei allen bekannten Verfahren ist, dass es nicht möglich ist, einen bestimmten Faservolumengehalt einzustellen, der auch während des Tränkens der Fasern konstant bleibt.

Weitere Imprägnierungsvorrichtungen sind aus den Dokumenten WO01/96077, US3231414 und WO2017/053251 bekannt.

Aufgabe der vorliegenden Erfindung war es daher, eine Vorrichtung und ein Verfahren zur Imprägnierung von Fasern bereitzustellen, mit denen ein vorgegebener Faservolumengehalt eingestellt werden kann und bei denen sich der Faservolumengehalt auch während des Imprägnierens nicht aufgrund von Schwankungen der Betriebsparameter während der Produktion nicht ändert.

Die Aufgabe wird gelöst durch eine Vorrichtung zur Imprägnierung von Fasern mit einem Matrixmaterial, umfassend eine Einheit zum Tränken der Fasern mit dem Matrixmaterial, wobei eine Einheit zur Einstellung des Faservolumengehalts umfasst ist, die mindestens eine Öffnung umfasst, durch die die getränkten Fasern geführt werden, wobei jede Öffnung an ihrem minimalen Öffnungsquerschnitt so dimensioniert ist, dass so viel Matrixmaterial entfernt wird, dass der gewünschte Faservolumengehalt erreicht wird. Die Einheit zur Einstellung des Faservolumengehalts umfasst ein Oberteil und ein Unterteil und die Öffnung ist jeweils zum Teil im Unterteil und zum Teil im Oberteil ausgebildet.

Fasern, die mit der Vorrichtung imprägniert werden können, können zum Beispiel in Form von Rovings, Fäden oder Garnen vorliegen, bevorzugt als Rovings. Alternativ können die Fasern auch in Form flächiger Faserstrukturen vorliegen, beispielsweise als Matten, Gewebe, Gestricke, Gewirke oder Vliese.

Die Einheit zum Tränken der Fasern umfasst zum Beispiel ein Bad zur Aufnahme des Matrixmaterials. Alternativ kann aber auch jede andere, dem Fachmann bekannte Einheit zum Tränken von Fasern eingesetzt werden, beispielsweise eine Walzenimprägnierung oder auch eine Einheit, in der das Matrixmaterial auf die Fasern gegossen wird. Weiterhin ist es auch möglich, als Einheit zum Tränken der Fasern einen Mischkopf, bevorzugt einen Niederdruckmischkopf vorzusehen. Hierbei werden die Fasern in einer Kammer unter dem Mischkopf imprägniert.

Nach dem Imprägnieren werden die Fasern durch die Öffnung in der Einheit zur Einstellung des Faservolumengehalts geführt. Wenn eine große Menge an Matrixmaterial von den Fasern aufgenommen wurde, besteht auch die Möglichkeit, vor der Durchführung der Fasern durch die Öffnung in der Einheit zur Einstellung des Faservolumengehalts Matrixmaterial von den Fasern abzustreifen. Hierzu können beispielsweise Abstreifer mit einer Abstreifkante, über die die Fasern geführt werden, eingesetzt werden. Insbesondere beim Tränken mit einem Mischkopf ist es bevorzugt, die Fasern direkt nach dem Tränken durch die Einheit zur Einstellung des Faservolumengehalts zu führen.

Weiterhin wird die Aufgabe gelöst durch ein Verfahren zur Einstellung des Faservolumengehalts beim Imprägnieren von Fasern in einer solchen Vorrichtung, folgende Schritte umfassend:

(a) Tränken der Fasern mit einem Matrixmaterial,

(b) Durchführen der getränkten Fasern durch die mindestens eine Öffnung der Einrichtung zur Einstellung des Faservolumengehalts, wobei mindestens zwei Fasern durch jede Öffnung der Einheit zur Einstellung des Faservolumengehalts geführt werden und jede Öffnung eine minimale Querschnittsfläche aufweist, die folgende Beziehung erfüllt:

$$A = \frac{n \cdot Tex}{\varphi \cdot \rho}$$

mit

-   n = Anzahl der Fasern, die im Betrieb durch die Öffnung geführt werden,
-   Tex = Texzahl der Fasern in g/1000m
-   $\varphi$ = Faservolumengehalt
-   $\rho$ = Dichte der Fasern.

Für den Faservolumengehalt $\varphi$ gilt

$$\varphi = \frac{V_{Faser}}{V_{Faser} + V_{Matrix}}$$

mit dem Faservolumen $V_{Faser}$ und dem Matrixvolumen $V_{Matrix}$.

Wenn keine Einzelfasern sondern Rovings oder flächige Faserstrukturen mit dem Matrixmaterial getränkt werden sollen, ist es bevorzugt, wenn anstelle der Anzahl der Fasern und der Texzahl der Fasern die Anzahl und die Texzahl der Rovings beziehungsweise der flächigen Faserstrukturen, die durch eine Öffnung geführt werden, eingesetzt werden.

Durch das Durchführen der Fasern durch mindestens eine Öffnung, die an ihrem minimalen Öffnungsquerschnitt so dimensioniert ist, dass so viel Matrixmaterial entfernt wird, dass der gewünschte Faservolumengehalt erreicht wird, wird aus den getränkten Fasern immer so viel Matrixmaterial entfernt, dass der Faservolumengehalt hinter der Öffnung immer gleich ist. Auch bei Schwankungen in den Prozessparametern, zum Beispiel bei lokal höherem Matrixmaterialgehalt, wird anders als bei den Abstreifern, an deren Abstreifkante Matrixmaterial entfernt wird, immer ein gleichbleibender Faservolumengehalt erzielt, da die getränkten Fasern von allen Seiten beim Durchlaufen durch die Öffnung umschlossen sind und so auch keine Tropfen an den Fasern hängen bleiben können, die den Faservolumengehalt lokal verringern können.

Ein weiterer Vorteil der erfindungsgemäßen Vorrichtung und des erfindungsgemäßen Verfahrens ist, dass sich je nach Anwendung unterschiedliche Faservolumengehalte einstellen lassen können, indem der Öffnungsquerschnitt der Öffnung in der Einheit zur Einstellung des Faservolumengehalts geändert wird. Hierzu kann entweder die Öffnung in der Einheit zur Einstellung des Faservolumengehalts einstellbar sein oder alternativ werden mehrere austauschbare Einheiten zur Einstellung des Faservolumengehalts mit unterschiedlichen Öffnungsquerschnitten bereitgehalten, wobei zur Einstellung des gewünschten Öffnungsquerschnitts die Einheit mit dem passenden Öffnungsquerschnitt ausgewählt und eingesetzt wird. Bevorzugt ist es jedoch, wenn die Öffnung in der Einheit zur Einstellung des Faservolumengehalts einstellbar ist.

Die Form der Öffnung ist abhängig von den zu tränkenden Fasern. So ist es zum Beispiel bei Fasern in Form von einzelnen Fäden, Garnen oder Rovings bevorzugt, eine Öffnung mit einer runden Querschnittsfläche vorzusehen, wohingegen bei einer flächigen Faserstruktur, beispielsweise Matten, Geweben, Gestricken, Gewirken oder Vliesen eine schlitzförmige Öffnung bevorzugt ist, deren Höhe mindestens der Dicke der flächigen Faserstruktur entspricht und die vorzugsweise maximal doppelt so hoch ist wie die doppelte Dicke der Faserstruktur.

In einer Ausführungsform wird die Querschnittsfläche der mindestens einen Öffnung in der Einheit zur Einstellung des Faservolumengehalts in Laufrichtung der Fasern im Betrieb kleiner. Bevorzugt nimmt die Querschnittsfläche in Laufrichtung stetig ab und besonders bevorzugt ist die Abnahme der Querschnittsfläche in Laufrichtung der Fasern konisch. Durch die Abnahme der Querschnittsfläche in Laufrichtung der Fasern kann zum einen ein gleichmäßigeres Pressen der getränkten Fasern erreicht werden, wodurch ein gleichmäßiges Durchführen der Fasern durch die Öffnungen in der Einheit zur Einstellung des Faservolumengehalts ermöglicht wird, auch dann, wenn der Faservolumengehalt vor der Einheit zur Einstellung des Faservolumengehalts nicht konstant ist. Ein weiterer Vorteil einer Gestaltung der Öffnungen in der Einheit zur Einstellung des Faservolumengehalts mit abnehmender Querschnittsfläche in Laufrichtung der Fasern im Betrieb ist, dass das aus den Fasern abgestreifte und/oder ausgepresste Matrixmaterial aus der Öffnung leichter abfließen kann und so nicht den Vorgang der Einstellung des Faservolumengehalts behindert. Das abgestreifte und/oder ausgepresste Matrixmaterial wird vorzugsweise aufgefangen und in die Einheit zum Tränken der Fasern zurückgeführt.

Wenn die Fasern als Rovings vorliegen, ist es zur Einstellung eines definierten Faservolumengehalts vorteilhaft, wenn die Fasern der zu imprägnierenden Rovings nicht vereinzelt werden müssen sondern die Rovings in Form eines Bündels verbleiben können. Hierzu ist es bevorzugt, wenn jede Öffnung in der Einheit zur Einstellung des Faservolumengehalts eine maximale Breite und eine maximale Höhe aufweist, die jeweils mindestens dem Durchmesser eines Rovings entsprechen. Wenn mehrere Rovings durch eine Öffnung geführt werden sollen und die maximale Höhe der Öffnung dem Durchmesser eines Rovings entspricht, muss die Breite der Öffnung mindestens der Anzahl der Rovings mal deren Durchmesser entsprechen, da die Rovings in diesem Fall alle nebeneinander durch die Öffnung geführt werden. Wenn die so als Langloch gestaltete Öffnung um 90° gedreht angeordnet ist, entspricht die maximale Breite dem Durchmesser eines Rovings und die Höhe dem Produkt aus Anzahl der Rovings mal dem Durchmesser eines Rovings. Bevorzugt ist es jedoch, die Öffnung so zu gestalten, dass die Rovings in Form eines Bündels durch die Öffnung geführt werden können. Besonders bevorzugt ist es dabei, die Öffnung kreisförmig zu gestalten. Es ist jedoch auch jede andere Form der Öffnung möglich, zum Beispiel in Form eines Ovals oder eines Polygons mit mindestens 3 Ecken. Bevorzugt ist es jedoch, wenn die Öffnung eine Form ohne Ecken aufweist, das heißt kreisförmig oder oval ist. Eine Gestaltung der Öffnung derart, dass die Höhe oder die Breite dem Durchmesser eines Rovings entspricht, ist jedoch nur für Anwendungen möglich, bei denen einzelne Rovings nacheinander getränkt werden sollen. Sobald es, zum Beispiel für die Herstellung von gewickelten Hohlkörpern, notwendig ist, Endlosfasern einzusetzen, die dadurch erzeugt werden, dass Rovings beispielsweise durch Verknoten miteinander verbunden werden, ist eine minimale Höhe oder Breite erforderlich, die doppelt so groß ist wie der Durchmesser eines Rovings.

Wenn die zu tränkenden Fasern als Rovings vorliegen, ist die Querschnittsfläche der Öffnung vorzugsweise so groß gewählt, dass mindestens 2 Rovings, bevorzugt mindestens 4 Rovings und insbesondere mindestens 7 Rovings durchgeführt werden können. Die maximale Anzahl an Rovings ergibt sich auch durch die Einheit zum Tränken der Fasern, in der die Rovings zuvor getränkt werden. Da die Rovings einzeln getränkt werden sollen und dann zur Durchführung durch die Öffnung in der Einheit zum Einstellen des Faservolumengehalts zusammengeführt werden, führt eine sehr große Anzahl an Rovings bei einer Vorrichtung mit einem Bad zum Tränken der Rovings zu einem sehr breiten Bad. Zudem wird auch für das Zusammenführen der Rovings eine gewisse Strecke benötigt, so dass maximale Anzahl an Rovings im Allgemeinen nicht größer als 50 ist. Um die Strecke zum Zusammenführen der Rovings zu verkürzen ist es auch möglich, bei einer großen Anzahl an Rovings mehrere Öffnungen in der Einheit zur Einstellung des Faservolumengehalts vorzusehen, durch die jeweils ein Teil der getränkten Rovings geführt wird. Vorzugsweise ist die Querschnittsfläche der Öffnung so groß, dass diese mindestens der Querschnittsfläche entspricht, die $n+1$ Rovings aufweisen, wobei $n$ die Anzahl der Rovings ist, die durch die Öffnung geführt werden. Durch das Durchführen mehrerer Rovings durch die Öffnung in der Einheit zur Einstellung des Faservolumengehalts wringen sich die Rovings entsprechend der eingestellten Querschnittsfläche selber aus und erreichen so den gewünschten Faservolumengehalt.

Um die Vorrichtung für unterschiedliche Anzahlen an Fasern einsetzen zu können oder den Faservolumengehalt zu variieren, ist es möglich, mehrere Einheiten zur Einstellung des Faservolumengehalts vorzusehen, wobei jede der Einheiten zur Einstellung des Faservolumengehalts eine andere Querschnittsfläche aufweist. Bevorzugt ist es jedoch, wenn jede Öffnung in der Einheit zur Einstellung des Faservolumengehalts einstellbar ist. Dies erlaubt es, die gleiche Einheit zur Einstellung des Faservolumengehalts für unterschiedliche Faservolumengehalte oder alternativ für unterschiedliche Anzahlen an Fasern einzusetzen.

Unabhängig davon, ob die Einheit zur Einstellung des Faservolumengehalts einstellbar ist oder nicht, umfasst die Einheit zur Einstellung des Faservolumengehalts ein Oberteil und ein Unterteil und die Öffnung ist jeweils zum Teil im Oberteil und zum Teil im Unterteil ausgebildet. Dies hat den Vorteil, dass die Fasern auf einfache Weise in die Einheit zur Einstellung des Faservolumengehalts eingelegt werden können. So können die Fasern in den Teil der Öffnung im Unterteil eingelegt werden und anschließend das Oberteil aufgesetzt werden. Um das Einlegen der Fasern zu erleichtern ist es dabei besonders vorteilhaft, wenn der Teil der Öffnung im Unterteil größer ist als der Teil der Öffnung im Oberteil. Besonders bevorzugt ist der Teil der Öffnung im Unterteil so groß, dass die Fasern vollständig in den Teil der Öffnung im Unterteil eingelegt werden können, um zu vermeiden, dass beim Aufsetzen des Oberteils Fasern aus der Öffnung rutschen und zwischen dem Unterteil und dem Oberteil verklemmt werden. Hierzu ist es besonders vorteilhaft, wenn der Teil der Öffnung im Unterteil 75 bis 100 % des gesamten Öffnungsquerschnitts beträgt. Ein Anteil von 100 % des gesamten Öffnungsquerschnitts ist insbesondere dann möglich, wenn der Teil der Öffnung im Unterteil mit dem Oberteil plan abgeschlossen wird.

Bevorzugt ist es jedoch, wenn die Einheit zur Einstellung des Faservolumengehalts ein Oberteil und ein Unterteil umfasst, die jeweils eine Aussparung aufweisen, wobei sich bei montierter Einheit zur Einstellung des Faservolumengehalts die Aussparung im Unterteil und die Aussparung im Oberteil überschneiden und so die Öffnung bilden und der Öffnungsquerschnitt durch die Position des Oberteils zum Unterteil einstellbar ist. Dies lässt sich zum Beispiel so realisieren, dass sich das Oberteil und das Unterteil unterschiedlich weit überschneiden, wobei es hier sowohl möglich ist, das Oberteil und das Unterteil zueinander horizontal oder vertikal zu verschieben. Bevorzugt ist es dabei, wenn das Oberteil oder das Unterteil fest montiert sind und entsprechend das Unterteil bei fest montiertem Oberteil oder das Oberteil bei fest montiertem Unterteil verschiebbar montiert sind.

In einer besonders bevorzugten Ausführungsform ist die Einheit zur Einstellung des Faservolumengehalts so gestaltet und positioniert, dass diese mit der Seite, auf der die Fasern zugeführt werden, in das Bad eintaucht und die Seite, auf der die Fasern aus der Einheit zur Einstellung des Faservolumens austreten, außerhalb des Bades liegt. Diese Positionierung der Einheit zur Einstellung des Faservolumens hat den Vorteil, dass mit dem abgestreiften und zurücklaufenden Matrixmaterial keine Luft oder kein Gas in das Matrixmaterial im Bad eingetragen wird, wodurch eine Alterung des Matrixmaterials weiter verzögert wird und zudem auch verhindert wird, dass in das Matrixmaterial eingebrachte Luftbläschen eine vollständige Tränkung der Fasern beeinträchtigen. Das Eintragen von Luft oder Gas wird dadurch verhindert, dass die Einheit zur Einstellung des Faservolumengehalts in diesem Fall vollständig mit den Fasern und dem Matrixmaterial befüllt ist und keine Luft bzw. kein Gas enthält. Wenn sich die Seite der Einheit zur Einstellung des Faservolumengehalts, auf der die getränkten Fasern zugeführt werden, außerhalb des Bades aus Matrixmaterial befindet, tropft zurückfließendes Matrixmaterial zunächst durch die Luft oder das Gas oberhalb des Bades und kann auf diese Weise Luft oder Gas mitreißen, das so in das Bad eingetragen wird. Durch die Bewegung des Matrixmaterials im Bad, die sich sowohl durch zurückfließende oder eintropfendes abgestreiftes Matrixmaterial als auch durch die Bewegung der Fasern ergibt, wird das mitgerissene Gas in feine Bläschen zerteilt und im Matrixmaterial verteilt.

Besonders vorteilhaft ist es, eine Einheit zur Einstellung des Faservolumengehalts, die mit einer Seite in das Bad aus Matrixmaterial hineinragt und mit der anderen Seite außerhalb des Bades liegt, so zu gestalten, dass die Einheit zur Einstellung des Faservolumengehalts eine Düse mit dem minimalen Querschnitt aufweist, die in das Matrixmaterial hineinragt und einen sich an die Düse anschließenden Kanal, beispielsweise in Form einer Hülse, durch den die getränkten Fasern geführt werden und der außerhalb des Matrixmaterials endet. Die Querschnittsfläche des Kanals wird dabei so groß gewählt, dass die getränkten Fasern die Wandung des Kanals nicht berühren. Um das überschüssige Matrixmaterial an der minimalen Querschnittsfläche abzustreifen ist es weiterhin bevorzugt, am Kanal an der Position der minimalen Querschnittsfläche eine umlaufende Abstreifkante vorzusehen. Der Querschnitt des Kanals kann dabei jede beliebige Form einnehmen, wobei eine Querschnittsform ohne Ecken, beispielsweise ein runder Querschnitt oder ein ovaler Querschnitt bevorzugt ist. In einer Ausführungsform ist die Düse so ausgeführt, dass diese einen veränderbaren Querschnitt aufweist, um so den Faservolumengehalt einstellen zu können. Alternativ ist es auch möglich, eine austauschbare Düse für die Einstellung des Faservolumengehaltes vorzusehen.

Bevorzugt ist es, die Einheit zur Einstellung des Faservolumengehalts, die eine Düse und einen Kanal aufweist zweiteilig zu gestalten, wobei diese ein Unterteil und einen Deckel aufweist, so dass die Fasern auf einfache Weise in das Unterteil eingelegt werden können und die Einheit zur Einstellung des Faservolumengehalts anschließend mit dem Deckel verschlossen wird.

Alternativ ist es auch möglich, die Einheit zur Einstellung des Faservolumengehalts in einer Wandung des Bades auszuführen. In diesem Fall wird die Einheit zur Einstellung des Faservolumengehalts als Öffnung in der Wandung ausgeführt, wobei diese an der Außenseite die minimale Querschnittsfläche aufweist. Auf der Innenseite, das heißt der dem Bad zugewandten Seite, ist die Querschnittsfläche größer, so dass die Fasern leichter durch die Öffnung eingefädelt werden können. Wenn die Einheit zur Einstellung des Volumengehalts in der Wandung des Bades ausgeführt ist, ist es weiterhin bevorzugt, zuerst die Fasern einzulegen und anschließend das Matrixmaterial einzufüllen. Durch die durch die die Einheit zur Einstellung des Faservolumengehalts bildende Öffnung geführten Fasern erfolgt auch gleichzeitig eine Abdichtung, durch die verhindert wird, dass das Matrixmaterial aus dem Bad ausläuft.

Auch die Zuführung der Fasern kann in der Wandung des Bades ausgebildet sein. Dies ist unabhängig von der Art der Einheit zur Einstellung des Faservolumengehalts möglich. Wenn die Zuführung der Fasern in das Bad als Öffnung in der Wandung ausgebildet ist, entspricht die Querschnittsfläche am engsten Querschnitt vorzugsweise der Querschnittsfläche, die die zuzuführenden Fasern einnehmen. Auch hier ist es vorteilhaft, wenn die Querschnittsfläche der Öffnung auf der Seite, durch die die Fasern in das Bad eintreten, größer ist, um das Einfädeln der Fasern zu erleichtern. Durch die minimale Querschnittsfläche, die der Querschnittsfläche der Fasern entspricht, die durch die Öffnung geführt werden, wird im Betrieb, das heißt während des Tränkens der Fasern aufgrund der Faserbewegung verhindert, dass Matrixmaterial durch die Öffnung aus dem Bad ausläuft. Die durch die Öffnung geführten Fasern wirken dabei als Dichtung.

Besonders bevorzugt ist es, die Vorrichtung zur Imprägnierung von Fasern, bei der die Fasern durch eine Öffnung in der Wandung des Bades zugeführt werden und die Einheit zur Einstellung des Faservolumengehalts ebenfalls in der Wandung des Bades ausgeführt ist, mit einem Deckel zu verschließen. Insbesondere, wenn die mit dem Deckel verschlossene Vorrichtung vollständig mit Matrixmaterial befüllt ist, ist es möglich, die Vorrichtung zur Imprägnierung von Fasern in einem beliebigen Winkel zu positionieren. Auf diese Weise können imprägnierte Fasern aus der Vorrichtung zur Imprägnierung von Fasern von verschiedenen Positionen einem Wickelkern zugeführt werden, ohne dass die Fasern nach dem Verlassen der Einheit zur Einstellung des Faservolumengehalts noch einmal umgelenkt werden müssen. Insbesondere ist mit einer solchen Vorrichtung auch eine sternförmige Zuführung der Fasern zum Wickelkern möglich, wobei die Vorrichtungen zur Imprägnierung der Fasern ebenfalls sternförmig angeordnet sind.

Bevorzugt ist es weiterhin, wenn die Vorrichtung zur Imprägnierung von Fasern, bei der die Fasern durch eine Öffnung in der Wandung des Bades zugeführt werden und durch eine in der Wandung des Bades ausgebildete Einheit zur Einstellung des Faservolumengehalts abgezogen werden, einen Anschluss vorzusehen, durch den Matrixmaterial nachgeführt werden kann. Über den Anschluss kann dann zunächst die Befüllung mit Matrixmaterial erfolgen, nachdem die Fasern eingelegt worden sind und anschließend lässt sich im laufenden Betrieb Matrixmaterial nachführen, so dass es nicht erforderlich ist, den Wickelprozess zu unterbrechen, um aufgebrauchtes Matrixmaterial zu ergänzen.

Wenn Faserbündel oder Rovings zugeführt werden, weist die Querschnittsfläche der Öffnung zur Zufur der Fasern ebenso wie die Öffnung, die die Einheit zur Einstellung des Faservolumengehalts bildet, vorzugsweise keine Ecken auf. Geeignete Querschnittsformen sind zum Beispiel Kreisform oder Oval. Wenn die zu tränkenden Fasern als Flachfasern, zum Beispiel in Form schmaler Bänder vorliegen, ist die Querschnittsform der Öffnungen zur Zufuhr der Fasern - sofern vorhanden - und die Querschnittsform der die Einheit zur Einstellung des Faservolumengehalts bildenden Öffnung vorzugsweise rechteckig, wobei auch in diesem Fall die Ecken des die Öffnung bildenden Rechtecks abgerundet sein können.

Bei der Zufuhr von Faserbündeln oder Bündeln aus mehreren Rovings ist es weiterhin bevorzugt, die Faserbündel oder Bündel aus mehreren Rovings nach der Zufuhr aufzuteilen. Hierbei kann eine Aufteilung eines Faserbündels in Einzelfasern oder auch in Einheiten mit einer geringeren Anzahl an Fasern erfolgen, wenn Faserbündel zugeführt werden. Bei der Zufuhr von Bündeln aus mehreren Rovings erfolgt die Aufteilung vorzugsweise in Einzelrovings. Hierzu sind zum Beispiel Umlenkeinheiten im Bad aus Matrixmaterial vorgesehen, um die die Einzelfasern, Einheiten mit einer geringeren Anzahl an Fasern oder Einzelrovings geführt werden. Durch die Aufteilung wird das Tränken der Fasern mit dem Matrixmaterial verbessert, da das Matrixmaterial aufgrund des kleineren Querschnitts nicht so tief in die Fasern eindringen muss, um ein vollständiges Tränken der Fasern zu erreichen.

Wenn die Einheit zum Tränken der Fasern ein Bad mit dem Matrixmaterial umfasst, ist es bevorzugt, wenn die Vorrichtung ein Unterteil umfasst, in der das Bad aufgenommen ist, sowie einen Deckel zum Verschließen, wobei bei montiertem Deckel zwischen dem Deckel und dem Unterteil an den Seiten, durch die die Fasern in die Vorrichtung geführt werden und aus der Vorrichtung austritt, jeweils ein Spalt ausgebildet ist. Bei einer solchen Gestaltung mit Unterteil und Deckel ist es weiterhin bevorzugt, wenn das Oberteil der Einheit zur Einstellung des Faservolumengehalts am Deckel und das Unterteil der Einheit zur Einstellung des Faservolumengehalts am Unterteil angeordnet sind.

Damit das von den Fasern abtropfende Matrixmaterial nicht entsorgt werden muss sondern wiederverwendet werden kann, weist das Unterteil eine in Richtung des Bades geneigte Fläche auf, über die von den Fasern abtropfendes Matrixmaterial in das Bad zurücklaufen kann.

Durch das Bad mit Matrixmaterial, durch das die Fasern zum Tränken geführt werden, ist es nicht notwendig, Dosiereinheiten vorzusehen, mit denen eine exakte Menge an Matrixmaterial zugeführt wird. Die Fasern nehmen das Matrixmaterial beim Durchlaufen durch das Bad auf.

Insbesondere, wenn eine große Menge an Matrixmaterial aufgenommen wird, ist es vorteilhaft, vor dem Durchführen durch die Einheit zur Einstellung des Faservolumengehalts überschüssiges Matrixmaterial abzustreifen. Hierzu kann mindestens ein Abstreifer mit Abstreifkante, über den die Fasern im Betrieb geführt werden, eingesetzt werden. Das abgestreifte Matrixmaterial tropft auf die in Richtung des Bades geneigte Fläche, so dass das überschüssige und abgestreifte Matrixmaterial über die geneigte Fläche wieder zurück in das Bad läuft und so wiederverwertet werden kann.

Durch den Deckel, mit dem die Vorrichtung verschlossen wird, wird verhindert, dass ein ständiger Luftaustausch oberhalb des Bades erfolgt. Hierdurch kann zum einen die Verdunstung des Matrixmaterials eingeschränkt werden, zum anderen wird auch die ständige Zufuhr von frischer Luft unterbunden, so dass eine Reaktion des Matrixmaterials mit dem in der Luft enthaltenen Wasser verlangsamt wird. Das im Bad enthaltene Matrixmaterial kann somit länger genutzt werden und muss weniger oft wegen eintretender Alterung und damit einhergehender Zunahme der Viskosität ausgetauscht werden. Um zu verhindern, dass die Fasern beim Eintritt in die Vorrichtung oder beim Verlassen der Vorrichtung geschädigt werden und weiterhin zu verhindern, dass bei Verlassen der Vorrichtung das Matrixmaterial wieder aus den Fasern ausgepresst wird, ist ein Spalt zwischen Deckel und Unterteil vorgesehen, durch den die Fasern in die Vorrichtung geführt werden und ein zweiter Spalt, durch den die getränkten Fasern die Vorrichtung wieder verlassen.

An dem Deckel ist vorzugsweise eine Umlenkeinheit montiert, mit der die Fasern bei montiertem Deckel in das Bad gedrückt werden. Hierdurch ist es möglich, das Bad unabhängig vom Einlegen der Fasern zu befüllen. Die Fasern können auf einfache Weise oberhalb der Oberfläche des Bades eingelegt werden und werden dann bei Montage des Deckels mit dem Umlenkteil in das Bad gedrückt. Ein umständliches Einlegen bei entleertem Bad entfällt somit.

Durch den Aufbau mit der Umlenkeinheit am Decke kann das Unterteil für eine Reinigung auf einfache Weise entnommen und durch ein neues Unterteil ersetzt werden. Hierdurch sind keine langen Betriebsunterbrechungen bei einer Reinigung erforderlich. Sollte der Reinigungsaufwand zu groß sein oder nur mit umweltschädlichen Mitteln möglich sein, so dass eine Entsorgung günstiger und umweltfreundlicher durchgeführt werden kann, erlaubt es die erfindungsgemäße Vorrichtung auch, Unterteile als Einwegteile auszuführen und jeweils bei Bedarf ein Unterteil durch ein neues zu ersetzen.

Um nach dem Durchlaufen des Bades die Fasern gleichmäßig abzustreifen ist es bevorzugt, wenn zusätzlich zu dem mindestens einen Abstreifer, über den die getränkten Fasern im Betrieb der Vorrichtung geführt werden, mindestens ein Abstreifer am Deckel montiert ist, der bei montiertem Deckel von oben mit einer Abstreifkante auf die getränkten Fasern drückt. Mit dem mindestens einen am Deckel montierten Abstreifer wird auch das überschüssige Matrixmaterial von der Oberseite der Fasern abgestreift. Auch dieses tropft von dem Abstreifer auf die in Richtung des Bades geneigte Fläche, von der das Matrixmaterial in das Bad zurückfließt. Durch die Montage des Abstreifers am Deckel ist es auch hier möglich, die Fasern auf einfache Weise in die Vorrichtung über die am Unterteil montierten Teile einzulegen. Die von oben einwirkenden Teile drücken dann entsprechend nach Montage des Deckels auf die Fasern. Ein aufwendiges Einfädeln zwischen den einzelnen Abstreifern und Umlenkteilen ist nicht erforderlich.

Damit der auf die Fasern wirkende Druck eingestellt werden kann ist es weiterhin bevorzugt, wenn mindestens ein am Deckel montierter Abstreifer höhenverstellbar ist. Besonders bevorzugt ist es, wenn alle am Deckel montierten Abstreifer höhenverstellbar sind. Wenn mehrere Abstreifer vorgesehen sind, die am Deckel montiert sind, ist es möglich, jeden Abstreifer individuell einzustellen. Dies ermöglicht eine Führung durch die am Unterteil und am Deckel montierten Abstreifer derart, dass eine gewünschte Menge an Matrixmaterial in den Fasern verbleibt. Je größer der Abstand zwischen Abstreifkante des am Deckel montierten Abstreifers und dem Deckel ist, umso größer ist der Druck, der auf die getränkten Fasern wirkt und umso mehr Matrixmaterial wird abgestreift. Wenn also Fasern mit viel Matrixmaterial erhalten werden soll, werden die Abstreifer so eingestellt, dass ein nur geringer Druck auf die Faserstruktur wirkt, wenn stattdessen ein nur geringer Anteil an Matrixmaterial in den Fasern enthalten sein soll, werden die Abstreifer so eingestellt, dass ein höherer Druck auf die Faserstruktur wirkt.

Um das Matrixmaterial gleichmäßig von den Fasern abzustreifen ist es weiterhin bevorzugt, wenn dass die Abstreifer am Deckel und am Unterteil in Förderrichtung der Fasern versetzt zueinander angeordnet sind. Besonders bevorzugt ist es dabei, wenn in Förderrichtung der Fasern jeweils abwechselnd ein Abstreifer am Deckel und einer am Unterteil angeordnet ist. Durch eine solche Anordnung werden die Fasern gleichmäßig von oben und unten an den Abstreifern entlang geführt und das Matrixmaterial abgestreift. Eine Abwechselnde Anordnung der Abstreifer am Unterteil und am Deckel führt weiterhin dazu, dass die am Deckel montierten Abstreifer jeweils zwischen den am Unterteil montierten Abstreifern kämmen. Dies hat den weiteren positiven Effekt, dass bei einer Höheneinstellung der Abstreifer am Deckel auf die Fasern, die die Abstreifkante des am Deckel montierten Abstreifers passieren der gleiche Druck wirkt wie an der benachbarten Abstreifkante des am Unterteil montierten Abstreifers. Hierdurch wird eine gleichmäßige Imprägnierung der Fasern erhalten.

Damit das überschüssige Matrixmaterial von den Fasern abgestreift wird, ist es besonders vorteilhaft, wenn die die Abstreifer am Unterteil und am Deckel jeweils so dimensioniert sind, dass die Abstreifkante der Abstreifer am Deckel tiefer ist als die Abstreifkante der Abstreifer im Unterteil der Vorrichtung. Auf diese Weise erfolgt immer ein Kämmen der am Deckel montierten Abstreifer zwischen den am Unterteil montierten Abstreifern. Durch eine Höhenverstellung der am Unterteil montierten Abstreifer und/oder der am Deckel montierten Abstreifer kann dann eingestellt werden, wie tief die Abstreifer ineinander kämmen.

Die abschließende genaue Einstellung des Anteils an Matrixmaterial in den Fasern erfolgt nach dem passieren der Abstreifer in der Einheit zur Einstellung des Faservolumengehalts.

Als Material für die Abstreifer und die Einheit zur Einstellung des Faservolumengehalts eignen sich insbesondere abriebfestes Metall, abriebfester Kunststoff, abriebfeste Keramik oder Glas. Durch den Einsatz eines abriebfesten Materials wird sichergestellt, dass keine vom Abstreifer oder der Einheit zur Einstellung des Faservolumenanteils abgetragenen Partikel als Fremdstoffe in die getränkten Fasern gelangen. Zudem wird hierdurch verhindert, dass sich die Abstreifkanten beziehungsweise die mindestens eine Öffnung in der Einheit zur Einstellung des Faservolumengehalts im Laufe des Betriebs durch Abrieb verformen. Hierdurch wird eine gleichmäßige Wirkung der Abstreifer und der Einheit zur Einstellung des Faservolumengehalts über die gesamte Betriebsdauer erzielt. Besonders bevorzugt als Material für die Abstreifer und die Einheit zur Einstellung des Faservolumengehalts sind Stahl, Polyethylen hoher Dichte (HDPE), Polytetrafluorethylen (PTFE), Keramik oder Glas.

Unter abriebfest wird im Rahmen der vorliegenden Erfindung verstanden, dass beim Durchlauf von 1000 km der Fasern, insbesondere von Rovings, weniger als 0,1 mm des Materials des Abstreifers durch die durchlaufenden Fasern abgetragen werden.

Damit die Fasern beim Einführen in die Vorrichtung nicht geschädigt werden und insbesondere nicht über eine Kante streifen, ist es bevorzugt, wenn am Unterteil eine erste Umlenkeinheit vorgesehen ist, über die die Fasern vor dem Eintritt in das Bad geführt werden. Entsprechend ist vorzugsweise eine zweite Umlenkeinheit am Unterteil vorgesehen, über die die getränkten Fasern nach Verlassen des Bades geführt werden. Da die erste Umlenkeinheit und die zweite Umlenkeinheit jeweils am Unterteil vorgesehen sind, können die Fasern beim Einlegen einfach auf die Umlenkeinheiten gelegt werden. Mit der der am Deckel befestigten Umlenkeinheit werden die Fasern dann in das Bad gedrückt, so dass die Fasern über die erste Umlenkeinheit am Unterteil, entlang der Umlenkeinheit am Deckel und über die zweite Umlenkeinheit am Unterteil zur Abtropfeinheit geführt werden. Die erste Umlenkeinheit und die zweite Umlenkeinheit am Unterteil sind dabei so platziert, dass die Umlenkeinheit am Deckel bei der Montage zwischen der ersten Umlenkeinheit am Unterteil und der zweiten Umlenkeinheit am Deckel positioniert ist.

Um bereits beim Verlassen des Bades und vor der Abtropfeinheit überflüssiges Matrixmaterial von den Fasern zu entfernen, ist es weiterhin bevorzugt, wenn am Deckel eine Abstreifwalze montiert ist, die bei montiertem Deckel die Fasern auf die zweite Umlenkeinheit drückt. Die Fasern werden im Betrieb zwischen der zweiten Umlenkeinheit und der Abstreifwalze hindurchgeführt. Da die Abstreifwalze auf die Umlenkeinheit drückt, wird überschüssiges Matrixmaterial bereits an dieser Stelle aus den Fasern gedrückt. Die Positionierung der zweiten Umlenkeinheit und der Abstreifwalze führt weiterhin dazu, dass das überschüssige Matrixmaterial direkt in das Bad zurückläuft.

Die erste und die zweite Umlenkeinheit können jeweils unabhängig voneinander eine Stange oder eine drehbare Rolle sein. Ebenso kann die Umlenkeinheit, mit der die Fasern in das Bad gedrückt werden, mindestens einen Stab oder mindestens eine rotierende Rolle umfassen. Wenn die Umlenkeinheit eine Stange ist, so weist diese vorzugsweise nur abgerundete Kanten auf und ist besonders bevorzugt ein Rundstab. Es können für die Umlenkelemente sowohl Stangen als auch drehbare Rollen vorgesehen sein. Bevorzugt ist es jedoch, wenn zumindest die erste und die zweite Umlenkeinheit, die am Unterteil angeordnet sind entweder beide als Stange oder beide als rotierende Rolle ausgebildet sind. Besonders bevorzugt sind alle Umlenkelemente als Stange oder alle Umlenkelemente als drehbare Rolle ausgebildet.

Geeignete Materialien für die Umlenkelemente sind die gleichen wie die Materialien für die Abstreifer und die Einheit zur Einstellung des Faservolumengehalts. Das heißt, dass die Umlenkelemente vorzugsweise aus abriebfestem Metall, abriebfestem Kunststoff, einer abriebfesten Keramik oder aus Glas gefertigt werden und besonders bevorzugt aus Stahl, HDPE, PTFE, Keramik oder Glas sind.

Um die Fasern in das Bad zu drücken kann nur ein Umlenkelement am Deckel vorgesehen sein oder es können mehrere Umlenkelemente am Deckel montiert sein. Hierbei sind alle am Deckel montierten Umlenkelemente so positioniert, dass diese zwischen dem ersten und dem zweiten Umlenkelement am Unterteil positioniert sind, wenn der Deckel geschlossen ist und wenn die Umlenkelemente am Unterteil vorhanden sind.

Damit verhindert wird, dass ein ständiger Luftaustausch durch die Spalte erfolgt, durch die die Fasern im Betrieb geführt werden und so ständig Wasser mit der Luftfeuchtigkeit zugeführt wird oder Matrixmaterial verdunstet und aus der Vorrichtung ausgetragen wird, ist es bevorzugt, wenn am Spalt, durch den die Faserstruktur in die Vorrichtung geführt wird und/oder am Spalt, durch den die Fasern aus der Vorrichtung austreten eine Dichtlippe vorgesehen ist. Die Dichtlippe kann dabei aus jedem beliebigen geeigneten Material gefertigt sein, insbesondere einem Elastomermaterial, wie es üblicherweise für Dichtungen eingesetzt wird. Die Verwendung des Elastomermaterials sichert, dass sowohl die noch nicht imprägnierten Fasern beim Einlass in die Vorrichtung als auch die imprägnierten Fasern beim Verlassen der Vorrichtung nicht durch die Dichtlippe geschädigt werden. Weiterhin ist bei der Einstellung der Dichtlippe, durch die die getränkten Fasern austreten, darauf zu achten, dass kein Matrixmaterial mehr aus den getränkten Fasern gepresst wird, um den Faservolumengehalt nicht zu verändern.

Um zu verhindern, dass Matrixmaterial mit Komponenten aus der Umgebungsluft, insbesondere in der Luft enthaltenem Wasser reagieren und dabei aushärten kann, ist es weiterhin bevorzugt, wenn ein Zulauf und ein Ablauf für ein Spülgas umfasst sind. Mit dem Spülgas kann die Atmosphäre oberhalb des Matrixmaterials entfernt und durch das Spülgas ausgetauscht werden. Geeignete Spülgase sind abhängig vom eingesetzten Matrixmaterial. So wird zum Beispiel bei Matrixmaterialien, die mit Wasser reagieren ein wasserfreies Spülgas eingesetzt. Hierzu eignen sich zum Beispiel trockene Luft oder auch ein trockenes Inertgas wie Stickstoff, Kohlendioxid oder ein Edelgas. Inertgase eignen sich auch dann, wenn das Matrixmaterial mit anderen Komponenten der Luft, beispielsweise dem darin enthaltenen Sauerstoff, reagieren kann. Wenn im Unterschied dazu verhindert werden soll, dass Matrixmaterial verdunstet kann zum Beispiel ein Spülgas eingesetzt werden, das mit den Komponenten des Matrixmaterials, die verdunsten können, gesättigt ist.

Wenn das Bad zum Tränken der Fasern einen Deckel aufweist und eine Einheit zur Einstellung des Faservolumengehalts vorgesehen ist, die mit einer Seite in das Bad aus Matrixmaterial eintaucht und bei der die andere Seite außerhalb des Bades aus Matrixmaterial liegt, wird die Einheit zur Einstellung des Faservolumengehalts vorzugsweise so am Deckel befestigt, dass die Seite der Einheit zur Einstellung des Faservolumengehalts, auf der die Faser austreten, auf der Außenseite des Deckels angeordnet ist, so dass die Fasern mit der Einheit zur Einstellung des Faservolumengehalts durch den Deckel geführt werden. Hierdurch kann auf eine zusätzliche Dichtlippe zur Abdichtung des Innenraums des Bades verzichtet werden.

Die Anzahl der eingesetzten Einheiten zur Einstellung des Faservolumengehalts ist auch für die Einheiten zur Einstellung des Faservolumengehalts, die mit einer Seite in das Bad hineinragen und bei denen die andere Seite außerhalb des Bades liegt, abhängig von der Anzahl der zu tränkenden Fasern oder Faserbündel. Bevorzugt entspricht die Anzahl der Einheiten zur Einstellung des Faservolumengehalts der Anzahl wie sie vorstehend für die Variante beschrieben ist, bei der sich die gesamte Einheit zur Einstellung des Faservolumengehalts außerhalb des Bades aus Matrixmaterial befindet. Auch der Durchmesser des minimalen Querschnitts der Einheit zur Einstellung des Faservolumengehalts entspricht dem vorstehend beschriebenen.

Um das Tränken der Fasern zu verbessern und gegebenenfalls in der Faser enthaltene Luft auszutreiben, insbesondere wenn Rovings oder Faserbündel imprägniert werden sollen, ist es weiterhin vorteilhaft, wenn im Bad Abstreifer vorgesehen sind, über die die Fasern geführt werden. Die Abstreifkanten der Abstreifer befinden sich dabei insbesondere im Betrieb unterhalb des Flüssigkeitsspiegels des Matrixmaterials. Durch den Druck, den die Abstreifer auf die Fasern ausüben, wird das Matrixmaterial in die Fasern gedrückt und gegebenenfalls in den Fasern enthaltene Luft oder in den Fasern enthaltenes Gas aus den Fasern herausgedrückt. Die Abstreifer sind dabei zum Beispiel so gestaltet, wie vorstehend für die Abstreifer außerhalb des Bades beschrieben. Besonders vorteilhaft ist es hierbei, wenn mindestens zwei Abstreifer vorgesehen sind, wobei mindestens ein Abstreifer von oben auf die Faser wirkt und mindestens ein Abstreifer von unten. Hierbei ist es weiterhin vorteilhaft, wenn die von oben und unten auf die Faser wirkenden Abstreifer ineinander kämmen, so dass die Abstreifkante der von oben auf die Faser wirkenden Abstreifer unterhalb der Abstreifkante der von unten auf die Faser wirkenden Abstreifer liegt. Bevorzugt ist es auch hier, wenn die von unten auf die Faser wirkenden Abstreifer im Unterteil befestigt sind und die von oben auf die Faser wirkenden Abstreifer im Deckel, um die Fasern auf einfache Weise einlegen zu können und mit den am Deckel befestigten Abstreifern in das Bad zu drücken. Wenn im Bad Abstreifer vorgesehen sind, ist es möglich, diese alternativ zu den vorstehend beschriebenen Umlenkeinheiten zu verwenden, so dass bei Verwendung der Abstreifer innerhalb des Bades auf die Umlenkeinheiten verzichtet werden kann. Wenn kein Deckel vorgesehen ist, ist es weiterhin auch möglich, die Abstreifer, die von oben auf die Fasern wirken mit Hilfe einer beliebigen anderen Montageeinrichtung an dem das Bad enthaltenden Unterteil zu befestigen. Hierzu können die von oben auf die Fasern wirkenden Abstreifer zum Beispiel in Nuten in der Wandung im Unterteil geführt sein oder auch an einem Träger befestigt sein, der auf das Unterteil aufgesetzt wird. Auch ist es möglich, die Abstreifer direkt im Unterteil zu befestigen. Dies ist jedoch nicht die bevorzugte Variante, da in diesem Fall die Fasern aufwendig eingefädelt werden müssen, wohingegen bei einer Befestigung am Deckel oder an einem Träger oder auch bei Führung der Abstreifer in der Nut erst die Fasern eingelegt werden können und anschließend der Abstreifer montiert wird.

Wenn die zu tränkenden Fasern nicht in Form von Rovings oder Faserbündeln oder auch als Einzelfasern vorliegen sondern in Form von Faserbändern, zum Beispiel mit geflochtenen oder gewebten Fasern, sind die Abstreifer so ausgerichtet, dass diese auf die Breitseiten der Faserbänder wirken. Hierbei ist es auch möglich, einen Stapel von Faserbändern zuzuführen, der dann innerhalb des Bades in einzelne Faserbänder aufgeteilt wird. In diesem Fall werden für jedes einzelne Faserband Abstreifer vorgesehen, die parallel zueinander im Bad angeordnet sind, so dass jedes einzelne Faserband über mindestens zwei Abstreifer geführt wird, die jeweils auf die gegenüberliegenden breiten Flächen des Faserbandes wirken. Die Abstreifer wirken dabei wie die vorstehend für Faserbündel oder Bündel aus mehreren Rovings beschriebenen Umlenkeinheiten. Um auch hier mögliches im Faserband enthaltenes Gas, insbesondere Luft, auszutreiben, sind auch in diesem Fall die Abstreifer vorzugsweise so ausgerichtet, dass die Abstreifkanten ineinander greifen, so dass das Faserband mit den Abstreifern, die auf die eine Seite wirken jeweils gegen die Abstreifer gedrückt wird, die auf die andere Seite des Faserbandes wirken.

Besonders bevorzugt ist es, die Abstreifer innerhalb des Bades einzusetzen, wenn eine Einheit zur Einstellung des Faservolumengehalts eingesetzt wird, die mit der Seite, über die die Fasern zugeführt werden, in das Bad hineinragt und die Seite, über die die Fasern abgezogen werden außerhalb des Bades liegt

Zur Imprägnierung der Fasern, werden diese vorzugsweise einem Vorrat, beispielsweise einer Rolle, auf die die Fasern aufgewickelt sind, entnommen. Um die Vorrichtung zur Imprägnierung sinnvoll betreiben zu können, sind die zu imprägnierenden Fasern Endlosfaserbündel, so dass sich eine endliche Länge lediglich aus der Notwendigkeit ergibt, dass nicht beliebig lange Fasern in dem Vorrat enthalten sein können. Vorzugsweise sind die Fasern dann so gestaltet, dass bei Erreichen des Endes der Fasern nachfolgende neue Fasern auf einfache Weise mit den bisherigen Fasern verbunden werden können, zum Beispiel durch Verknoten.

Die Fasern werden besonders bevorzugt nach dem Imprägnieren in einem Nasswickelverfahren zu einem Bauteil aufgewickelt. Bauteile, die so hergestellt werden können, sind zum Beispiel Rohre, Masten oder Tanks jeder beliebigen Art und Größe.

Um eine ausreichende Festigkeit des Bauteils zu erhalten ist es weiterhin bevorzugt, wenn die Fasern Kohlenstofffasern, Glasfasern, Aramidfasern, synthetische Fasern, beispielsweise Polymerfasern oder Naturfasern sind. Hierbei können auch unterschiedliche Fasern eingesetzt werden. Die Auswahl der Fasern ergibt sich dabei insbesondere aus den mechanischen Anforderungen an das Bauteil. Üblich ist es jedoch, dass keine unterschiedlichen Fasern sondern nur Fasern aus einem Material eingesetzt werden. Besonders bevorzugt sind die Fasern Kohlenstofffasern, Glasfasern oder Aramidfasern.

Das Matrixmaterial, mit dem die Fasern imprägniert werden kann jedes beliebige thermoplastische Polymer sein oder Edukte zur Herstellung eines duroplastischen oder thermoplastischen Polymers enthalten, wobei die Edukte in flüssiger oder gelöster Form vorliegen müssen.

Wenn das Matrixmaterial ein thermoplastisches Polymer ist, so liegt dieses zum Beispiel als Schmelze vor. Alternativ ist es jedoch auch möglich, dass das Matrixmaterial Edukte zur Herstellung des Polymers in Form einer Monomerlösung, Oligomerlösung, Monomerschmelze oder Oligomerschmelze enthält, die dann zum gewünschten Polymer reagieren. Wenn die Fasern mit einem duroplastischen Polymer imprägniert werden sollen, enthält das Matrixmaterial immer Edukte zur Herstellung des gewünschten duroplastischen Polymers. Zusätzlich kann das Matrixmaterial übliche Katalysatoren enthalten. Edukte zur Herstellung des Polymers sind im Allgemeinen Monomere oder Oligomere, aus denen das Polymer aufgebaut ist. Wenn ein duroplastisches Polymer hergestellt werden soll, so können die Edukte auch bereits als Polymere vorliegen, die zum Duroplasten weiterreagieren.

Zur Einstellung der Eigenschaften des Bauteils kann das Matrixmaterial zudem Additive enthalten. Hierbei handelt es sich zum Beispiel um Weichmacher, Schlagzähmodifizierer, UV-Stabilisatoren, Flammschutzmittel und beliebige andere, dem Fachmann bekannte Additive, die üblicherweise zur Modifikation von Polymeren eingesetzt werden.

Besonders bevorzugt ist das Matrixmaterial ausgewählt aus ungesättigten Polyesterharzen (UP), Vinylestern (VE), Epoxidharzen (EP) und Polyurethanen (PUR) und deren Edukten.

Ausführungsbeispiele der Erfindung sind in den Figuren dargestellt und werden in der nachfolgenden Beschreibung näher erläutert.

Es zeigen:

| | |
|---|---|
| Figuren 1a und 1b | eine Einheit zur Einstellung des Faservolumengehalts in einer ersten Ausführungsform in geschlossener und geöffneter Position, |
| Figuren 2a und 2b | die Einheit zur Einstellung des Faservolumengehalts der Figuren 1a und 1b in geschlossener und geöffneter Position in Seitenansicht, |
| Figuren 3a bis 3c | eine Einheit zur Einstellung des Faservolumengehalts in einer zweiten Ausführungsform, |
| Figuren 4a und 4b | eine Einheit zur Einstellung des Faservolumengehalts in einer dritten Ausführungsform, |
| Figur 5 | eine Einheit zur Einstellung des Faservolumengehalts in einer vierten Ausführungsform, |
| Figur 6 | eine Prinzipdarstellung eines Nasswickelverfahrens, |
| Figur 7 | eine Schnittansicht einer erfindungsgemäßen Vorrichtung zur Imprägnierung einer Faserstruktur mit geöffnetem Deckel, |
| Figur 8 | eine Schnittansicht der Vorrichtung gemäß Figur 7 mit geschlossenem Deckel, |
| Figuren 9 bis 12 | Schnittansichten von unterschiedlichen Ausführungsformen einer erfindungsgemäßen Vorrichtung, |
| Figur 13 | eine Draufsicht auf eine Vorrichtung zur Imprägnierung von Fasern in einer zweiten Ausführungsform, |
| Figur 14 | eine Schnittdarstellung der in Figur 13 gezeigten Vorrichtung, |
| Figur 15 | eine Vorrichtung zur Imprägnierung von Fasern in einer dritten Ausführungsform mit Deckel zum Verschließen der Vorrichtung in geöffnetem Zustand, |
| Figur 16 die in Figur 15 | dargestellte Vorrichtung zur Imprägnierung von Fasern in geschlossenem Zustand, |
| Figur 17 | eine Vorrichtung zur Imprägnierung von Faserbändern in Draufsicht, |
| Figur 18 | die Vorrichtung aus Figur 17 in Seitenansicht, |
| Figur 19 | eine Schnittdarstellung einer Vorrichtung zur Imprägnierung von Fasern mit in das Bad eintauchender Einheit zur Einstellung des Faservolumengehalts, |

| Figur 20 die in Figur 19 | gezeigte Vorrichtung zur Imprägnierung von Fasern vor dem Einbringen der Fasern in das Bad, |
| Figur 21 | eine Vorrichtung zur Imprägnierung von Fasern mit in das Bad eintauchender Einheit zur Einstellung des Faservolumengehalts mit Deckel zum Verschließen des Bades mit geöffnetem Deckel, |
| Figur 22 die in Figur 21 | dargestellte Vorrichtung mit geschlossenem Deckel, |
| Figur 23 | eine Vorrichtung zur Imprägnierung von Fasern mit in das Bad eintauchender Einheit zur Einstellung des Faservolumengehalts und daran anschließende Vorrichtung zur Herstellung eines gewickelten Produkts in Draufsicht, |
| Figuren 24 und 25 | eine Einheit zur Einstellung des Faservolumengehalts, wie sie in einer wie in den Figuren 19 bis 23 dargestellten Vorrichtung zur Imprägnierung von Fasern eingesetzt werden kann. |

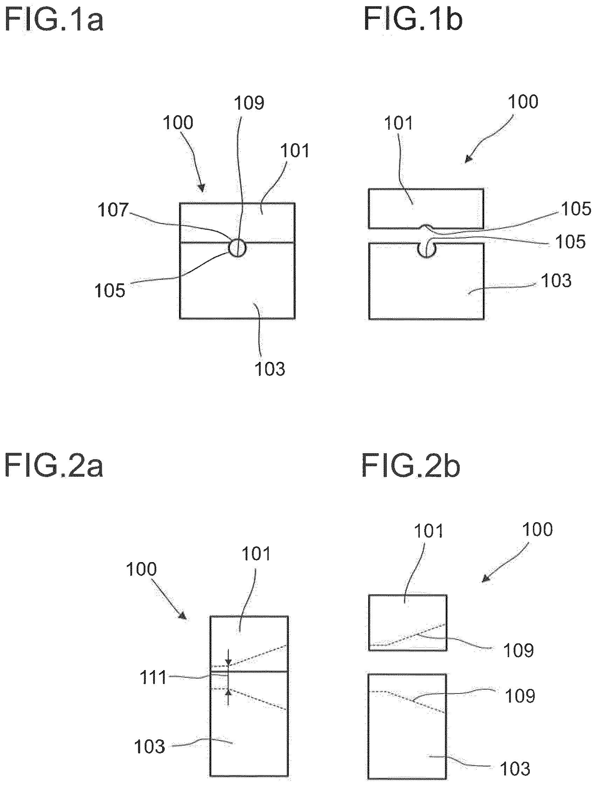

In den Figuren 1a und 1b ist eine Einheit zur Einstellung des Faservolumengehalts in einer ersten Ausführungsform dargestellt.

Eine Einheit zur Einstellung des Faservolumengehalts 100 umfasst ein Oberteil 101 und ein Unterteil 103. Im Oberteil 101 und im Unterteil 103 befindet sich jeweils eine Aussparung 105. Wenn das Oberteil 101 und das Unterteil 103 zusammengesetzt sind, formen die Aussparungen 105 eine Öffnung 107. Durch die Öffnung 107 werden im Betrieb mit Matrixmaterial getränkte Fasern geführt und überschüssiges Matrixmaterial wird am Rand 109 der Öffnung abgestreift.

Durch den Aufbau der Einheit zur Einstellung des Faservolumengehalts 100 mit Oberteil 101 und Unterteil 103 ist es möglich, die Einheit zur Einstellung des Faservolumengehalts 100 zu öffnen, wie dies in Figur 1b dargestellt ist. Dies ermöglicht ein leichteres Einlegen der Fasern in die Einheit zur Einstellung des Faservolumengehalts 100.

In den Figuren 2a und 2b ist die Einheit zur Einstellung des Faservolumengehalts 100 in der Ausführungsform der Figuren 1a und 1b in Seitenansicht dargestellt. Mit einer gestrichelten Linie ist dabei die Kontur der Öffnung 107 in Verlaufsrichtung der Fasern dargestellt. In Laufrichtung der Fasern nimmt der Öffnungsquerschnitt, bei einer kreisförmigen Öffnung 107, wie sie in den Figuren 1a und 1b gezeigt ist, der Durchmesser, bis zum Erreichen eines minimalen Öffnungsquerschnitts 111 ab. Der minimale Öffnungsquerschnitt erfüllt dabei während des Tränkens folgende Bedingung:

$$A = \frac{n \cdot Tex}{\varphi \cdot \rho}$$

mit

- n = Anzahl der Fasern, die im Betrieb durch die Öffnung geführt werden,
- Tex = Texzahl der Fasern in g/1000m
- $\varphi$ = Faservolumengehalt
- $\rho$ = Dichte der Fasern.

Für den Faservolumengehalt $\varphi$ gilt

$$\varphi = \frac{V_{Faser}}{V_{Faser} + V_{Matrix}}$$

mit dem Faservolumen $V_{Faser}$ und dem Matrixvolumen $V_{Matrix}$.

Wenn Rovings oder flächige Faserstrukturen imprägniert werden, können anstelle der Anzahl und der Texzahl der Fasern alternativ auch die Anzahl und die Texzahl der Rovings beziehungsweise der flächigen Faserstrukturen, die durch eine Öffnung geführt werden, eingesetzt werden.

Wie in den Figuren 2a und 2b dargestellt, nimmt der Öffnungsquerschnitt vorzugsweise stetig, insbesondere linear, ab. Bei einem kreisförmigen Querschnitt ergibt sich damit ein konischer Verlauf. Durch die stetige Abnahme des Öffnungsquerschnitts kann das Matrixmaterial, das im Bereich des minimalen Öffnungsquerschnitts abgestreift wird, auf einfache Weise aus der Einheit zur Einstellung des Faservolumengehalts 100 ablaufen.

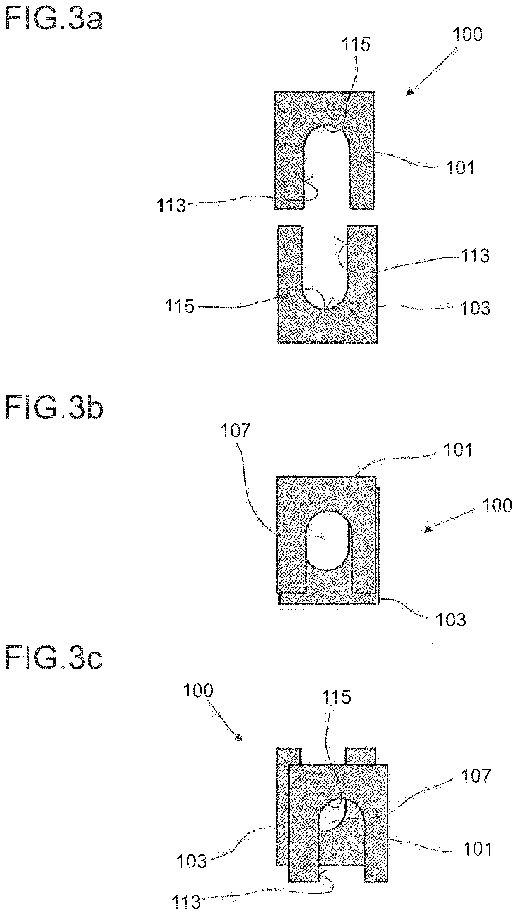

In den Figuren 3a bis 3c ist eine Einheit zur Einstellung des Faservolumengehalts in einer zweiten Ausführungsform dargestellt.

Die in den Figuren 3a bis 3c dargestellte Einheit zur Einstellung des Faservolumengehalts 100 umfasst wie die in den Figuren 1a, 1b, 2a und 2b dargestellte Einheit zur Einstellung des Faservolumengehalts ein Oberteil 101 und ein Unterteil 103. Im Oberteil 101 und im Unterteil 103 ist jeweils eine Aussparung 105 ausgebildet. Im Unterschied zur ersten Ausführungsform sind die Aussparungen 105 im Oberteil 101 und im Unterteil 103 u-förmig mit parallelen Seitenflächen 113 und einer halbkreisförmigen Basis 115. Im Unterschied zu der in den Figuren 1a bis 2b dargestellten Ausführungsform ist hier der Öffnungsquerschnitt der Öffnung 107 in der Einheit zur Einstellung des Faservolumengehalts 100 einstellbar. Hierzu werden das Oberteil 101 und das Unterteil 103 nicht unmittelbar aufeinander positioniert sondern das Oberteil 103 liegt in geschlossenem Zustand der Einheit zur Einstellung des Faservolumengehalts 100 vor oder hinter dem Unterteil. Die Größe der Öffnung 107 lässt sich einstellen, in dem der Bereich, in dem sich Oberteil 101 und Unterteil 103 überschneiden, variiert wird. Dies ist einerseits durch vertikale Verschiebung möglich, so dass die Seitenflächen 113 der Aussparungen 105 im Oberteil 101 und im Unterteil 103 fluchten übereinanderliegen, wie in Figur 3b dargestellt, oder auch durch horizontale Verschiebung, wodurch die Seitenflächen 113 der Aussparungen 105 im Oberteil 101 und im Unterteil 103 zueinander versetzt sind, wie in Figur 3c dargestellt. Hierdurch ist eine stufenlos variable Einstellung möglich. Zudem kann so neben der Höhe der Öffnung 107 auch die Breite variiert werden, so dass Fasern in allen möglichen Anordnungen durch die Öffnung 107 geführt werden können.

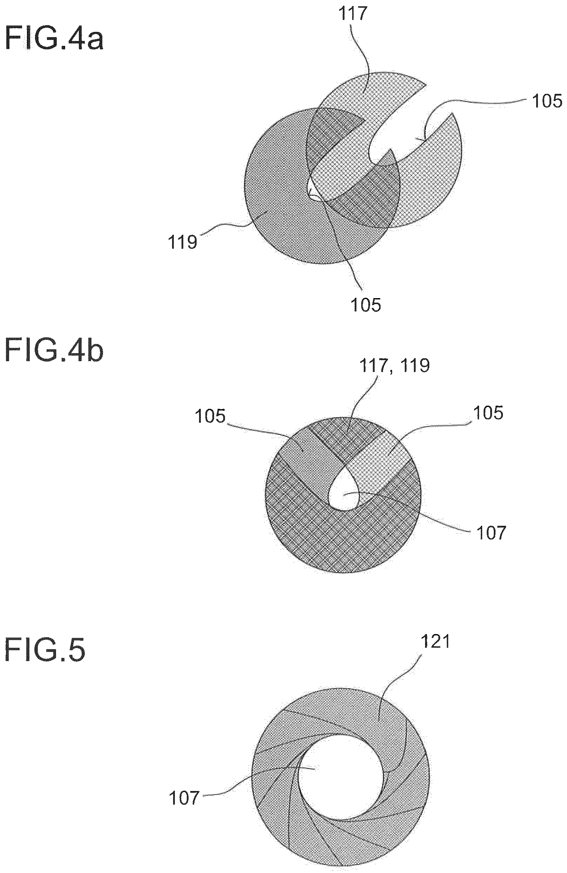

Neben einer Ausführung mit Oberteil 101 und Unterteil 103 ist es auch möglich, die Einheit zur Einstellung des Faservolumengehalts 100, wie in Figur 4a dargestellt, mit 2 zueinander drehbaren Platten 117, 119 zu gestalten, wobei in jeder Platte 117, 119 eine Aussparung 105 ausgebildet ist. Zur Ausbildung der Öffnung werden die Platten übereinander positioniert und so zueinander verdreht, dass die Aussparungen 105 in den beiden Platten 117, 119 in unterschiedliche Richtung weisen. Dies ist beispielhaft in Figur 4b gezeigt. Durch Drehen der Platten 117, 119 kann der Öffnungsquerschnitt variiert werden. Wenn die Aussparungen 105 in beiden Platten 117, 119 in die gleiche Richtung zeigen, ist die Öffnung 107 offen, so dass ein leichtes Einlegen der Fasern ermöglicht wird.

Eine einstellbare Einheit zur Einstellung des Faservolumengehalts in einer vierten Ausführungsform ist in Figur 5 dargestellt.

Bei der in Figur 5 dargestellten Ausführungsform ist die Öffnung 107 von einer Lamellenblende 121 umschlossen. Dies erlaubt eine einfache Einstellung des Öffnungsquerschnitts, indem die Lamellenblende weiter geöffnet oder geschlossen wird.

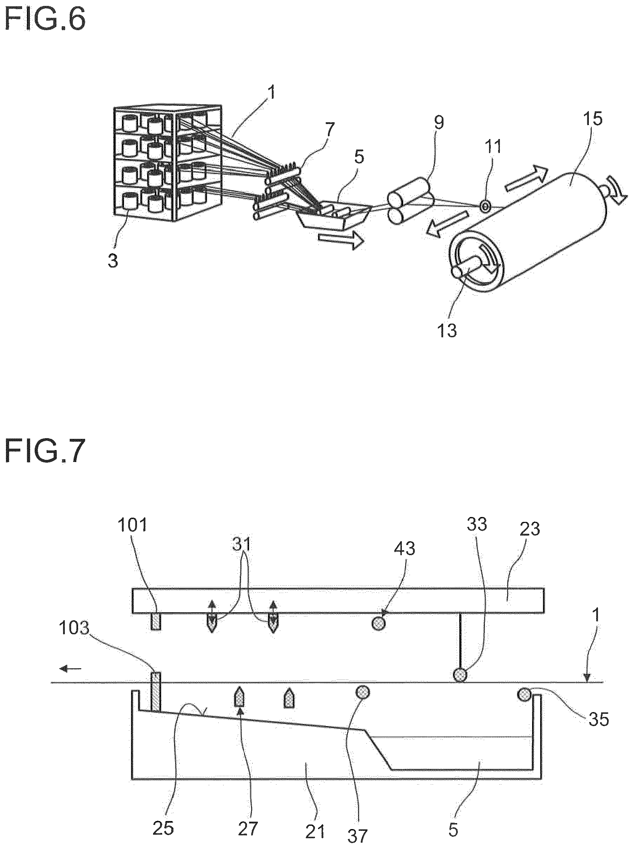

Insbesondere bei einer Vorrichtung zur Imprägnierung von Fasern mit einem Unterteil und einem Deckel eignen sich zweiteilig aufgebaute Einheiten zur Einstellung des Faservolumengehalts. In diesem Fall kann das Unterteil 103 der Einheit zur Einstellung des Faservolumengehalts 100 am Unterteil der Vorrichtung und das Oberteil 101 der Einheit zur Einstellung des Faservolumengehalts 100 am Deckel befestigt werden. Dies ist beispielhaft anhand der Figuren 7 bis 12 nachfolgend beschrieben.

Figur 6 zeigt ein Nasswickelverfahren, bei dem die erfindungsgemäße Vorrichtung zur Imprägnierung von Fasern zum Einsatz kommen kann, in einer Prinzipdarstellung.

Zur Herstellung von Bauteilen in einem Nasswickelverfahren werden Fasern 1 aus einem Vorrat 3, hier einem Spulengestell, einem Bad 5 zugeführt. Vor Eintritt in das Bad 5 werden die Fasern 1 durch Kämme 7 geleitet, in denen die Fasern 1 voneinander getrennt werden, damit diese im Bad 5 rundum mit dem Matrixmaterial in Kontakt kommen und so gleichmäßig imprägniert werden. An das Bad 5 schließt sich ein Abstreifwalzenpaar 9 an durch das die im Bad 5 imprägnierten Fasern 1 geführt werden. Am Abstreifwalzenpaar 9 wird überschüssiges Matrixmaterial von den imprägnierten Fasern 1 entfernt. Abschließend werden die imprägnierten Fasern 1 durch einen Führungsring 11 geführt und auf eine Spindel 13 gewickelt. Hierdurch wird ein rotationssymmetrisches Bauteil 15 erzeugt. Um eine gleichmäßige Wicklung des imprägnierten Fasern 1 auf der Spindel 13 zu erhalten ist der Führungsring 11 beweglich und kann, wie hier mit Pfeilen dargestellt parallel zur Achse der Spindel 11 bewegt werden.

Eine erfindungsgemäße Vorrichtung zur Imprägnierung von Fasern ist in Schnittansicht in Figur 7 dargestellt.

Eine Vorrichtung, in der die Fasern 1 mit Matrixmaterial imprägniert werden können, umfasst ein Unterteil 21 und einen Deckel 23. Im Unterteil 21 befindet sich das Bad 5 mit dem Matrixmaterial, mit dem die Fasern 1 getränkt werden sollen. In Bewegungsrichtung der Fasern 1 schließt sich an das Bad 5 eine in Richtung des Bades geneigte Fläche 25 an. Oberhalb der geneigten Fläche 25 sind am Unterteil 21 Abstreifer 27 mit jeweils einer Abstreifkante 29 angeordnet. Im laufenden Betrieb werden die Fasern 1 über die Abstreifkante 29 geführt und überschüssiges Matrixmaterial von den Fasern 1 entfernt. Durch die Positionierung der Abstreifer 27 oberhalb der geneigten Fläche fließt das abgestreifte Matrixmaterial zurück in das Bad 5.

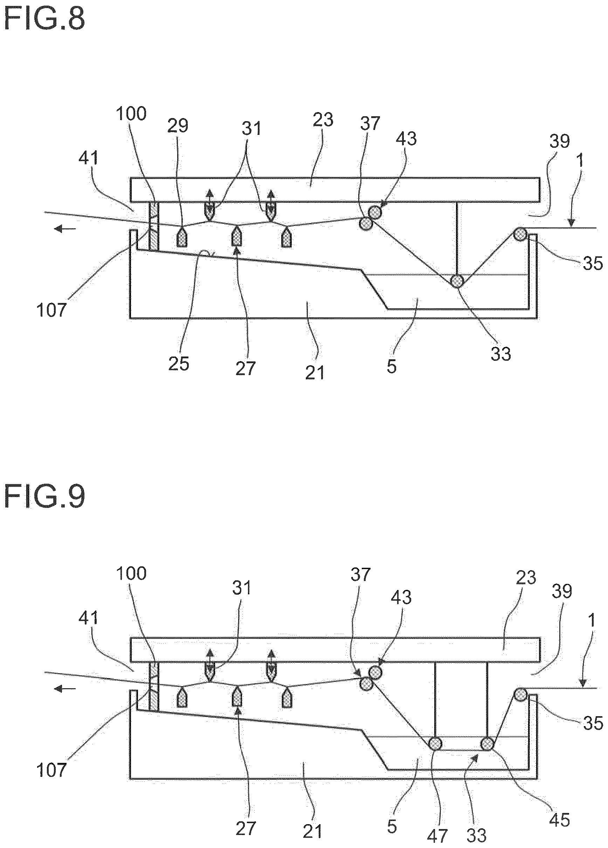

Am Deckel 23 sind Abstreifer 31 angebracht, die vorzugsweise höhenverstellbar sind. Die Abstreifer 31 am Deckel 23 sind dabei vorzugsweise so positioniert, dass diese zwischen den Abstreifern 27 am Unterteil 21 kämmen. Am Deckel 23 ist weiterhin eine Umlenkeinheit 33 montiert, mit der die Fasern 1 bei geschlossenem Deckel 23 in das Bad 5 gedrückt werden. Dies ist in Figur 8 dargestellt. Hier kann auch entnommen werden, dass die Abstreifer 27, die am Unterteil 21 befestigt sind, zwischen den Abstreifern 31, die am Deckel 23 montiert sind, kämmen. Hierdurch wird den Fasern 1 ein leichter Zick-Zack-Verlauf aufgeprägt

Damit die Fasern 1 vor Eintritt in das Bad 5 und nach dem Verlassen des Bades 5 nicht an Kanten am Unterteil geschädigt werden, sind in der hier dargestellten Ausführungsform eine erste Umlenkeinheit 35 und eine zweite Umlenkeinheit 37 am Unterteil 21 vorgesehen. Im Betrieb laufen die Fasern 1 durch einen Spalt 39 zwischen Unterteil 21 und Deckel 23 in die Vorrichtung zur Imprägnierung von Fasern, werden über die erste Umlenkeinheit 35 am Unterteil 21 geführt. Anschließend laufen die Fasern 1 entlang der Umlenkeinheit 33, die am Deckel 23 montiert ist und mit der die Fasern 1 in das Bad 5 getaucht werden. An die Umlenkeinheit 33 schließt sich die zweite Umlenkeinheit 37 an, über die die Fasern 1 geführt werden, bevor diese den Abstreifern 27, 31 zugeführt werden, an denen das überschüssige Matrixmaterial entfernt wird. Durch einen zweiten Spalt 41 verlassen die getränkten Fasern dann die Vorrichtung und können einer Weiterverarbeitung, zum Beispiel der Spindel 13 eines Nasswickelverfahrens, zugeführt werden. Alternativ zu Bauteilen, die im Nasswickelverfahren hergestellt werden, können aus den imprägnierten Fasern jedoch auch beliebige andere, zum Beispiel auch flächige Bauteile hergestellt werden. Hierzu ist es zum Beispiel möglich, die getränkten Fasern auf eine gewünschte Länge abzuschneiden und in einer geeigneten Form zum gewünschten Bauteil zu formen. Bevorzugt ist jedoch die Zufuhr zu einer Spindel 13 eines Nasswickelverfahrens.

Durch das Eintauchen der Fasern 1 in das Bad 5 haften in der Regel große Mengen an Matrixmaterial an der Faserstruktur 1, wenn diese das Bad 5 verlässt. Um einen ersten Überschuss an Matrixmaterial zu entfernen ist es bevorzugt, wenn - wie hier dargestellt - eine Abstreifwalze 43 umfasst ist, die bei geschlossenem Deckel 23 an der zweiten Umlenkeinheit 37 anliegt. Die getränkten Fasern werden dann zwischen der zweiten Umlenkeinheit 37 und der Abstreifwalze 43 hindurchgeführt.

Durch Einstellung der Höhe der am Deckel 23 montierten Abstreifer 31 kann der Druck eingestellt werden, mit dem die Abstreifer 27, 31 auf die getränkten Fasern 1 wirken. Hierdurch kann gezielt eingestellt werden, wieviel Matrixmaterial die getränkten Fasern 1 enthalten sollen. Bei einem höheren Druck, der erzielt wird, indem die am Deckel 23 befestigten Abstreifer 31 tiefer zwischen den Abstreifern 27 am Unterteil 21 kämmen, wird mehr Matrixmaterial aus den getränkten Fasern 1 gepresst, so dass diese insgesamt weniger Matrixmaterial enthalten als bei einer Einstellung der Abstreifer 31 derart, dass diese weniger tief zwischen den Abstreifern 27 am Unterteil 21 kämmen und der Druck auf die Fasern somit geringer ist.

Sowohl die am Deckel 23 montierte Umlenkeinheit 33 als auch die erste Umlenkeinheit 35 und die zweite Umlenkeinheit 37 am Unterteil 21 können jeweils unabhängig voneinander in Form einer Stange oder als drehbare Rolle ausgebildet sein. Wenn eine Umlenkeinheit 33, 35, 37 als Stange ausgebildet ist, so weist diese zumindest in dem Bereich, in dem ein Kontakt mit den Fasern 1 erfolgt, vorzugsweise nur abgerundete Kanten auf und ist insbesondere ein Rundstab.

Die eingesetzten Abstreifer 27, 31 können jede beliebige, dem Fachmann für Abstreifer bekannte Form annehmen. Auch können die Abstreifer in einer von 90° zur Faserstruktur 1 abweichenden Richtung ausgerichtet sein. Bei der Form und Ausrichtung der Abstreifer ist nur darauf zu achten, dass hierdurch die getränkten Fasern 1 nicht geschädigt werden. Die Abstreifer können dabei so gestaltet und ausgerichtet sein, wie es bereits derzeit bei Bädern zum Tränken von Fasern üblich ist.

Um den Faservolumengehalt präzise einzustellen, schließt sich an die Abstreifer 27 eine Einheit zur Einstellung des Faservolumengehalts 100 an. Die Fasern 1 werden durch die Öffnung 107 der Einheit zur Einstellung des Faservolumengehalts 100 geführt. Am Rand der Öffnung 107 wird das überschüssige Matrixmaterial abgestreift, tropft auf die geneigte Fläche 25 und kann dann zurück in das Bad 5 fließen. Durch die definierte Querschnittsfläche der Öffnung 107 wird anders als bei den Abstreifern 27, über die die Fasern 1 vorab geführt werden genau so viel Matrixmaterial entfernt, wie zur Einstellung des gewünschten Faservolumengehaltes erforderlich ist. Es ist eine wesentlich präzisere Einstellung möglich als bei den von oben und unten wechselweise auf die Fasern 1 drückenden Abstreifern 27.

In den Figuren 7 bis 11 sind jeweils Einheiten zur Einstellung des Faservolumengehalts dargestellt, bei denen das Oberteil 101 direkt auf dem Unterteil 103 aufliegt oder die alternativ auch einteilig ausgeführt sein können. Bei einer zweiteiligen Gestaltung kann zum Beispiel die in den Figuren 1a bis 2b gezeigte Ausführungsform eingesetzt werden. Zur Einstellung des Öffnungsquerschnittes ließen sich in diesen Fällen zum Beispiel die Platten 117, 119 oder auch die Lamellenblende 121 verwenden.

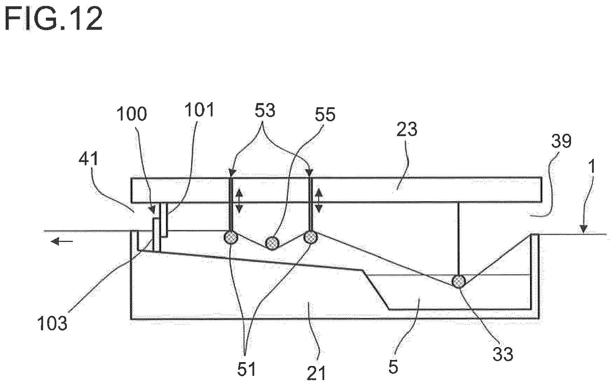

Alternativ könnte selbstverständlich auch die in den Figuren 3a bis 3c gezeigte Ausführungsform eingesetzt werden. Dies ist nachfolgend in Figur 12 dargestellt.

In den Figuren 9 bis 11 sind alternative Ausführungsformen zur Gestaltung der am Deckel 23 montierten Umlenkeinheit 33 dargestellt. Der restliche Aufbau der Vorrichtung zum Imprägnieren von Faserstrukturen entspricht der der in den Figuren 7 und 8 dargestellten Ausführungsform.

Bei der in Figur 9 dargestellten Ausführungsform umfasst die Umlenkeinheit 33 eine erste am Deckel 23 montierte Umlenkeinheit 45 und eine zweite am Deckel 2 montierte Umlenkeinheit 47. Auch hier ist es möglich, dass die erste am Deckel 23 montierte Umlenkeinheit 45 und die zweite am Deckel 23 montierte Umlenkeinheit als Stange oder als drehbare Rolle ausgebildet sind. Die Position der ersten am Deckel 23 montierten Umlenkeinheit 45 und der zweiten am Deckel 23 montierten Umlenkeinheit 47 ist so dass beide Umlenkeinheiten 45, 47 bei geschlossenem Deckel 23 zwischen der ersten Umlenkeinheit 35 und der zweiten Umlenkeinheit 37 positioniert sind.

Durch die erste am Deckel 23 montierte Umlenkeinheit 45 und die zweite am Deckel 23 montierte Umlenkeinheit 47 kann die Strecke, die die Fasern im Bad 5 zurücklegen verlängert und damit die Verweilzeit der Fasern im Bad 5 bei gleicher Geschwindigkeit im Vergleich zu nur einer Umlenkeinheit, wie sie in den Figuren 7 und 8 dargestellt ist, erhöht werden.

Es können auch noch mehr als drehbare Rolle oder Stange ausgebildete Umlenkeinheiten am Deckel 23 vorgesehen sein, dies ist jedoch nur dann sinnvoll, wenn diese jeweils mit den Fasern 1 in Kontakt sind und die Strecke, die die Fasern 1 im Bad 5 zurücklegen weiter verlängert wird.

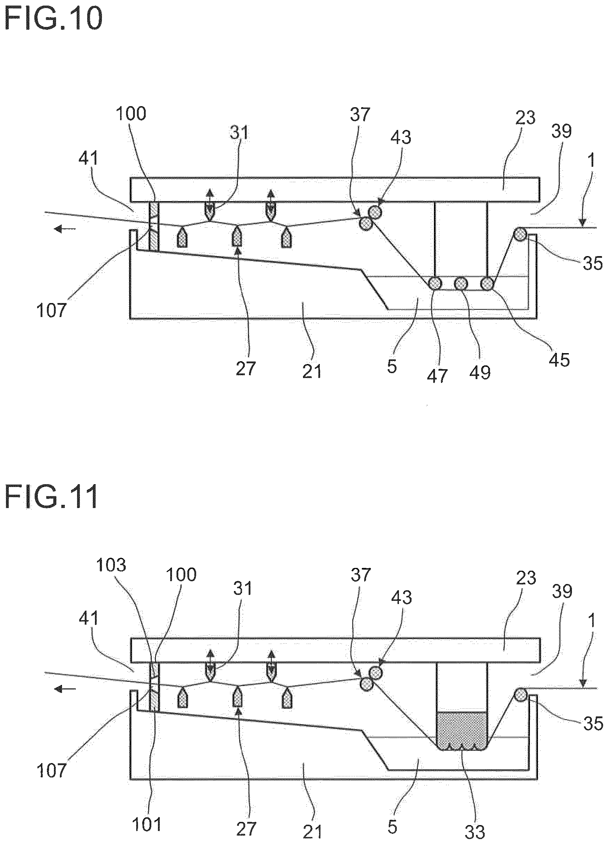

Alternativ zu weiteren Umlenkeinheiten am Deckel 23 ist es auch möglich, zur Verlängerung der Strecke im Bad 5 und gegebenenfalls zur Verbesserung der Imprägnierung eine zusätzliche Umlenkeinheit 49 im Bad 5 vorzusehen. Diese befindet sich, wie in Figur 10 dargestellt zwischen der ersten am Deckel 23 montierten Umlenkeinheit 45 und der zweiten am Deckel 23 montierten Umlenkeinheit 47. Durch die im Bad angeordnete zusätzliche Umlenkeinheit 49 werden die Fasern gegen die am Deckel montierten Umlenkeinheiten 45, 47 gedrückt und erfahren gleichzeitig auch einen Druck an der zusätzlichen Umlenkeinheit 49. Hierdurch wird Matrixmaterial zwischen die Fasern gedrückt und gegebenenfalls zwischen den Fasern der Fasern enthaltene Gaspolster werden herausgedrückt, so dass eine gleichmäßige und vor allem auch vollständige Imprägnierung erzielt wird.

Neben einzelnen Stangen oder drehbaren Rollen, wie es in den Figuren 7 bis 10 dargestellt ist, kann die Umlenkeinheit 33 auch in Form eines Stempels mit einer strukturierten Oberfläche ausgebildet sein. Dies ist beispielhaft für eine Umlenkeinheit mit einer wellenförmigen Oberfläche in Figur 11 dargestellt. Die Struktur der Oberfläche kann jedoch auch jede beliebige andere Form annehmen. Zu beachten ist nur, dass die Fasern durch die Struktur der Oberfläche der als Stempel ausgebildeten Umlenkeinheit 33 nicht geschädigt werden.

Eine Ausführungsform mit einer alternativen Gestaltung der Abtropfeinheit und mit verstellbarer Einheit zur Einstellung des Faservolumengehalts ist in Figur 12 dargestellt.

Im Unterschied zu den in den Figuren 7 bis 11 dargestellten Ausführungsformen ist hier die Abtropfeinheit nicht mit ineinander kämmenden Abstreifern 27, 31 gestaltet.

Bei der in Figur 12 dargestellten Ausführungsform sind in der Abtropfeinheit am Unterteil 21 Umlenkeinheiten 51, beispielsweise als Stange oder drehbare Rolle, vorgesehen und am Deckel 23 höhenverstellbare Abstreifer 53. Die Fasern 1 werden zwischen den Umlenkeinheiten 51 und den Abstreifern 53 hindurchgeführt, wobei die Fasern 1 mit den Umlenkeinheiten 51 gegen die Abstreifer 53 gedrückt werden. Die Abstreifer 53 können in ihrer Höhe verstellt werden, so dass diese mit einem einstellbaren Druck gegen die Umlenkeinheiten 51 gedrückt werden können. Hierdurch lässt sich die Menge an Matrixmaterial in den getränkten Fasern einstellen. Zwischen den Abstreifern 53 ist eine weitere Umlenkeinheit 55 am Deckel montiert. Mit dieser wird sichergestellt, dass die Fasern 1 auch dann, wenn ein Spalt zwischen Umlenkeinheit 51 und Abstreifer 53 ist, gegen die Umlenkeinheiten 51 gedrückt werden.

Im Unterschied zu den vorherigen Ausführungsformen ist hier gezeigt, wie eine Einheit zur Einstellung des Faservolumengehalts 100 mit einstellbarem Öffnungsquerschnitt, wie sie in den Figuren 3a bis 3c dargestellt ist, eingesetzt werden kann. Um das Oberteil 101 gegen das Unterteil 103 verschieben zu können, liegt in der hier dargestellten Ausführungsform das Oberteil 101 in Laufrichtung der Fasern 1 vor dem Unterteil 103 der Einheit zur Einstellung des Faservolumengehalts 100. Alternativ ist es selbstverständlich auch möglich, das Oberteil 103 so anzuordnen, dass dieses in Laufrichtung der Fasern hinter dem Unterteil 103 positioniert ist. Eine weitere Möglichkeit wäre auch, entweder das Oberteil 101 oder das Unterteil 103 mit einem quer zur Laufrichtung der Fasern 1 verlaufenden Schlitz zu gestalten und entsprechend das Unterteil 103 oder das Oberteil 101 in diesem Schlitz zu führen.

Zur Einstellung des Öffnungsquerschnitts sind das Oberteil 101 und/oder das Unterteil 103 vertikal verschiebbar montiert. Zusätzlich oder alternativ ist es auch möglich, das Oberteil 101 und/oder das Unterteil 103 horizontal verschiebbar zu montieren. Hierzu kann das Oberteil 101 und/oder das Unterteil 103 beispielsweise auf einer quer zur Laufrichtung der Fasern 1 verlaufenden Schiene montiert werden und zur Einstellung des Öffnungsquerschnitts auf der Schiene verschoben werden.

In allen Ausführungsformen ist es möglich, im Bereich der Spalte 39, 41, durch die die Fasern in die Vorrichtung geführt werden beziehungsweise die getränkten Fasern aus der Vorrichtung, Dichtelemente vorzusehen, um die Vorrichtung gegen eindringende Umgebungsluft abzudichten. Dies ist insbesondere dann vorteilhaft, wenn als Matrixmaterial ein Polymer beziehungsweise eine Polymervorläuferverbindung eingesetzt wird, die mit einem Luftbestandteil, beispielsweise in der Luft enthaltenem Wasser, chemisch reagiert. Zusätzlich können ein Zulauf und ein Ablauf für ein Spülgas vorgesehen sein, um den Gasraum oberhalb des Bades mit dem Spülgas zu spülen.

In allen hier dargestellten Ausführungsformen erlaubt die Vorrichtung zur Imprägnierung von Fasern bei einer Ausführung mit einer zweiteiligen Einheit zur Einstellung des Faservolumengehalts 100, bei der das Unterteil 103 am Boden Vorrichtung und das Oberteil 103 am Deckel 23 der Vorrichtung montiert ist, eine einfache Inbetriebnahme. Unabhängig davon, ob bereits Matrixmaterial im Bad 5 enthalten ist oder nicht, ist es möglich, bei geöffnetem Deckel 23 die Fasern 1 einfach aufzulegen. Durch die Umlenkeinheiten und Abstreifer am Deckel 23 werden die Fasern gegen die entsprechenden Umlenkeinheiten und Abstreifer am Unterteil 21 und in das Bad 5 gedrückt und nehmen so den vorgesehen Weg ein. Ein kompliziertes Einfädeln der Fasern oder ein Ablassen des Matrixmaterials aus dem Bad, um die Fasern um eine Walze herumzulegen ist daher mit der hier beschriebenen Vorrichtung nicht erforderlich. Entsprechend können die Fasern auch in die Aussparung 105 im Unterteil 103 eingelegt werden und mit dem Schließen des Deckels wird die Öffnung 107 durch entsprechende Positionierung des am Deckel 23 befestigten Oberteils 103 geschlossen, so dass die Fasern1 bei geschlossenem Deckel in der rundum geschlossenen Öffnung 107 liegen. Auf entsprechend einfache Weise können auch beim Abschalten die Fasern nach dem Öffnen des Deckels 23 wieder entnommen werden.

Zusätzlich ist es auf einfache Weise möglich, bei Bedarf durch Entnahme und Austausch des Unterteils 21 entweder ein anderes Matrixmaterial vorzulegen oder auch bei Bedarf ein Unterteil 21 zur Reinigung oder Entsorgung zu entnehmen und durch ein neues Unterteil 21 zu ersetzen. Hierdurch ist es insbesondere auch möglich, die Vorrichtung auch bei einer erforderlichen Reinigung des Bades weiter zu betreiben, indem einfach ein neues Unterteil eingesetzt wird, während das vorherige gereinigt wird.

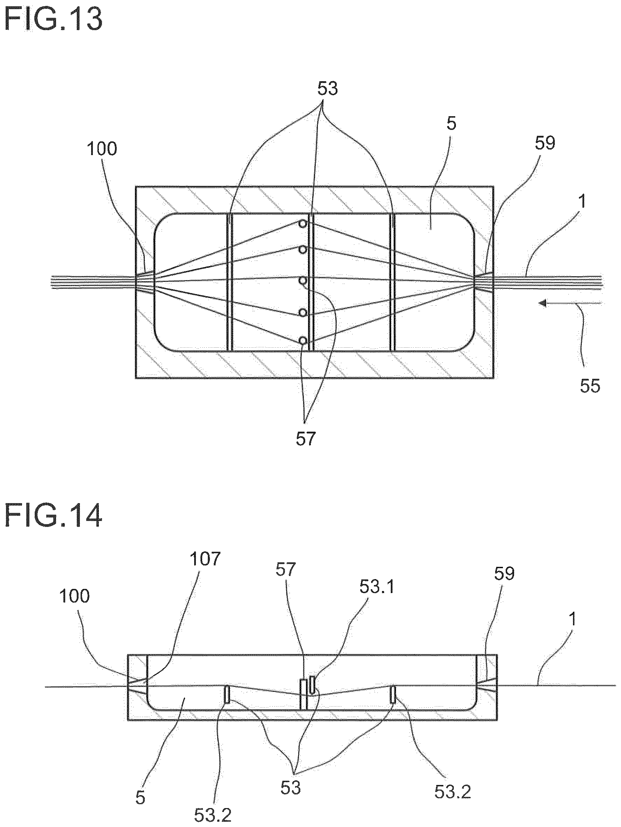

In den Figuren 13 und 14 ist eine Vorrichtung zur Imprägnierung von Fasern, bei der die Fasern als Bündel zugeführt werden, zur Imprägnierung vereinzelt und anschließend wieder zusammengeführt werden, dargestellt, wobei Figur 13 die Vorrichtung in Draufsicht zeigt und Figur 14 eine Schnittdarstellung ist.

Bei der in den Figuren 13 und 14 dargestellten Ausführungsform werden die Fasern 1 durch eine Öffnung 59 zur Zufuhr der Fasern in das Bad 1 mit Matrixmaterial zugeführt. Die Öffnung 59 zur Zufuhr der Fasern 1 ist in der hier dargestellten Ausführungsform konisch gestaltet, um das Einfädeln der Fasern 1 zu erleichtern. Vorzugsweise entspricht die Querschnittsfläche der Öffnung 59 an ihrem engsten Querschnitt der Querschnittsfläche der zugeführten Fasern 1.

Nach dem Eintritt in das Bad 5 werden die zugeführten Fasern 1, die entweder als Faserbündel oder als Bündel aus mehreren Rovings zugeführt werden, aufgeteilt. Die Aufteilung erfolgt dabei entweder in Einzelfasern oder in Bündel mit einer geringeren Anzahl an Fasern oder im Falle eines zugeführten Bündels aus Rovings in Einzelrovings, um ein besseres Tränken der Fasern 1 mit dem im Bad 5 enthaltenen Matrixmaterial zu gewährleisten. Um die Fasern 1 aufteilen zu können, sind im Bad 5 Umlenkelemente 57 positioniert, um die die zugeführten Einzelfasern, Gruppen aus einer geringeren Anzahl an Fasern oder Einzelrovings geführt werden. Die Anzahl der Umlenkelemente 57 ist dabei abhängig von der Anzahl der Einzelfasern, Gruppen aus einer geringeren Anzahl an Fasern oder Einzelrovings, die durch das Bad 5 geführt werden. Hinter den Umlenkelementen 57 werden die Einzelfasern, Gruppen aus einer geringeren Anzahl an Fasern oder Einzelrovings wieder zusammengeführt und der Einheit zur Einstellung des Faservolumengehalts 100 zugeführt. In der in den Figuren 13 und 14 dargestellten Ausführungsform ist die Einrichtung zur Einstellung des Faservolumengehalts 100 ebenfalls als Öffnung 107 in der Wandung des Bades 5 ausgebildet. Die Fasern werden durch die Öffnung 107 geführt, die für ein besseres Einfädeln der Fasern ebenfalls mit einer sich verkleinernden Querschnittsfläche ausgebildet ist.

Neben der hier dargestellten Variante, bei der der engste Querschnitt auf der Austrittsseite der Fasern ist, ist es auch möglich, die Öffnung 59 zur Zufuhr der Fasern und die Öffnung 107 der Einheit zur Einstellung des Faservolumengehalts 100 so zu gestalten, dass die Querschnittsfläche in Laufrichtung der Fasern im Betrieb zunächst abnimmt, bis die minimale Querschnittsfläche erreicht ist und anschließend wieder zunimmt.

Die minimale Querschnittsfläche der Öffnung 59 zur Zufuhr der Fasern entspricht vorzugsweise der Querschnittsfläche der durch die Öffnung 59 zugeführten Fasern. Hierdurch kann eine weitgehende Abdichtung gegenüber dem im Bad 5 enthaltenen Matrixmaterial, mit dem die Fasern getränkt werden, erreicht werden.

Durch die Gestaltung der Öffnung 107 der Einheit zur Einstellung des Faservolumengehalts 100 verlässt auch hier nur so viel Matrixmaterial das Bad, wie benötigt wird, um die Fasern zu tränken. Im Übrigen wirken hier die getränkten Fasern als Dichtung, durch die ein Auslaufen des Matrixmaterials aus dem Bad 5 verhindert wird.

Um die Fasern 1 möglichst vollständig zu tränken und noch in den Fasern enthaltenes Gas, insbesondere Luft, auszutreiben, sind im Bad 5 zusätzlich Abstreifer 53 vorgesehen. Die Abstreifer sind dabei vorzugsweise, wie hier dargestellt oberhalb und unterhalb der Fasern 1 angeordnet, wobei die Abstreifkanten so ausgerichtet sind, dass die Abstreifer 53.1, die von oben auf die Fasern 1 wirken, die Fasern auf die Abstreifer 53.2 drücken, die von unten auf die Fasern 1 wirken und entsprechend die von unten auf die Fasern 1 wirkenden Abstreifer 53.2 die Fasern 1 gegen die von oben auf die Fasern 1 wirkenden Abstreifer 53.1 drücken. Durch die Höhe, mit der die Abstreifer 53 ineinandergreifen, lässt sich der auf die Fasern 1 wirkende Druck und damit die Effektivität der Abstreifer 53 zum Austreiben des Gases einstellen.

Da in der in den Figuren 13 und 14 dargestellten Ausführungsform die Öffnung 59 zur Zufuhr der Fasern 1 und die Einheit zur Einstellung des Faservolumengehalts 100 unterhalb des Flüssigkeitsspiegels des Matrixmaterials liegen, werden für den Betrieb zunächst die Fasern eingelegt und erst nach dem Einlegen der Fasern 1 wird das Matrixmaterial in das Bad 5 gefüllt. Ein erleichtertes Einlegen der Fasern 1 kann zum Beispiel dadurch erreicht werden, dass die Abstreifer 53.1, die von oben auf die Fasern 1 wirken, erst nach dem Einlegen der Fasern eingesetzt wird. Hierzu ist es zum Beispiel möglich, den Abstreifer 53.1 in einer Nut in der Wandung des Bades 5 zu führen oder die von oben auf die Fasern 1 wirkenden Abstreifer 53.1 mit einem Träger oder einem das Bad verschließenden Deckel auf die Wandung des Bades 5 aufzusetzen. Die von unten auf die Fasern wirkenden Abstreifer 53.2 können zum Beispiel am Boden des Bades 5 befestigt werden.

Um ein gutes Ergebnis durch die Abstreifer 53 zu erhalten, werden mindestens 3 Abstreifer vorgesehen, wobei die Abstreifer jeweils abwechselnd von oben und von unten auf die Fasern wirken. Bei drei Abstreifern können zum Beispiel wie hier dargestellt zwei Abstreifer 53.2 von unten auf die Fasern 1 wirken und ein Abstreifer 53.1 von oben.

Alternativ ist jedoch auch eine umgekehrte Anordnung möglich, bei der zwei Abstreifer von oben und ein Abstreifer von unten auf die Fasern wirken. Die Position der Öffnung 59 zur Zufuhr der Fasern 1 ist dabei vorzugsweise so, dass die Öffnung 59 bei einem von oben auf die Fasern wirkenden Abstreifer als erstem Abstreifer hinter der Öffnung 59 zur Zufuhr der Fasern oberhalb der Abstreifkante des ersten Abstreifers liegt und bei einem von unten auf die Fasern wirkenden Abstreifer als erstem Abstreifer hinter der Öffnung 59 zur Zufuhr der Fasern unterhalb der Abstreifkante des ersten Abstreifers. Entsprechend liegt die Öffnung der Einheit zur Einstellung des Faservolumengehalts bei einem von oben auf die Fasern 1 wirkenden Abstreifer 53.1, der in Laufrichtung der Fasern als letztes vor der Öffnung der Einheit zur Einstellung des Faservolumengehalts liegt, oberhalb der Abstreifkante und bei einem von unten wirkenden Abstreifer 53.2 unterhalb der Abstreifkante. Durch die entsprechende Positionierung der Öffnung 59 zur Zufuhr der Fasern und der Öffnung der Einheit zur Einstellung des Faservolumengehalts 100 werden die Fasern auch gegen die Abstreifkante des ersten und des letzten Abstreifers 53 gedrückt.

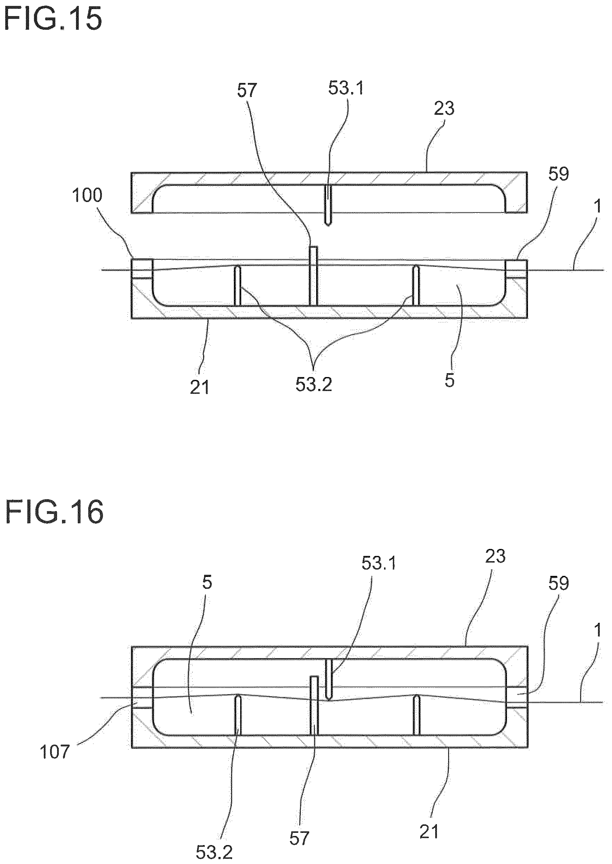

In den Figuren 15 und 16 ist eine Ausführungsform der Vorrichtung zum Imprägnieren von Fasern gezeigt, die in ihrem Aufbau der in den Figuren 13 und 14 gezeigten weitgehend entspricht, im Unterschied zu dieser aber mit einem Deckel verschließbar ist.

Auch bei der in den Figuren 15 und 16 dargestellten Ausführungsform werden die Fasern 1 durch eine Öffnung 59 zur Zufuhr der Fasern in das Bad 5 geführt. Im Bad 5 befinden sich die Abstreifer 53, die von oben und von unten auf die Fasern wirken. Die Abstreifer 53.2, die von unten auf die Fasern wirken, sind am Unterteil 21 befestigt und die Abstreifer 53.1, die von oben auf die Fasern wirken, am Deckel 23.

Um das Einlegen der Fasern zu erleichtern, sind das Unterteil 21 und der Deckel 23 so gestaltet, dass die Öffnung 59, durch die die Fasern zugeführt werden, und die Öffnung, die die Einheit zur Einstellung des Faservolumengehalts 100 bildet, so gestaltet, dass jeweils ein Teil der Öffnungen, vorzugsweise mehr als die Hälfte der Öffnung im Unterteil 21 und der restliche Teil der Öffnung im Deckel 23 ausgebildet ist. Dies erlaubt es, die Fasern auf einfache Weise von oben in die Öffnung 59 zur Zufuhr der Fasern und die die Einheit zur Einstellung des Faservolumengehalts 100 bildende Öffnung 107 einzulegen. Nach dem Einlegen der Fasern 1 und dem aufteilen der Fasern in Einzelfasern, Gruppen aus weniger Fasern oder bei einem Bündel aus Rovings in Einzelrovings, die um die Umlenkeinheiten 57 geführt werden, wird der Deckel 23 aufgesetzt, wie es in Figur 16 dargestellt ist. Mit dem Deckel werden die Öffnung 59, durch die die Fasern zugeführt werden sowie die Öffnung 107 der Einheit zur Einstellung des Faservolumengehalts 100 verschlossen. Gleichzeitig werden die am Deckel 23 befestigten Abstreifer 53.1 auf die Fasern gedrückt, so dass die Fasern 1 wiederum auf die am Boden befestigten Abstreifer 53.2 gedrückt werden. Hierdurch wirken die am Boden befestigten Abstreifer 53.2 von unten auf die Fasern und die am Deckel befestigten Abstreifer 53.1 von oben.

Nach dem Schließen des Deckels 53 wird das Matrixmaterial über eine geeignete Zufuhröffnung, die vorzugsweise verschließbar ist, in das Bad 5 eingefüllt. Vorzugsweise wird hierbei der zwischen Unterteil 21 und Deckel 23 gebildete Raum vollständig mit dem Matrixmaterial gefüllt. Die Zufuhröffnung für das Matrixmaterial befindet sich dabei vorzugsweise im Deckel, so dass das Matrixmaterial von oben in den Innenraum, der von Unterteil 21 und Deckel 23 umschlossen wird, eingefüllt werden kann. Zur Abdichtung des Bades ist zwischen dem Unterteil 21 und dem Deckel 23 ein Dichtelement eingebracht. Hierzu eignet sich jede beliebige, dem Fachmann bekannte Dichtung. So ist es zum Beispiel möglich, im Unterteil 21 oder im Deckel 23 eine Nut auszubilden und eine Dichtung, beispielsweise ein O-Ring in die Nut einzulegen. Alternativ kann auch ein Dichtungsband zwischen Unterteil 21 und Deckel 23 eingelegt werden.

Die Position der Öffnung 59 zur Zufuhr de Fasern 1 und der Öffnung 107 der Einheit zur Einstellung des Faservolumengehalts 100 ermöglichen es, die gesamte Vorrichtung zur Imprägnierung von Fasern beliebig zu positionieren, da durch die Befüllung des gesamten Innenraums mit dem Matrixmaterial die Fasern auch dann ausreichend getränkt werden, wenn die Vorrichtung zum Beispiel um einen beliebigen Winkel um die Längsachse oder die Querachse gedreht wird. Dies hat den Vorteil, dass die Vorrichtung zur Imprägnierung der Fasern passend ausgerichtet werden kann, wenn bei kontinuierlichen oder diskontinuierlichen Wickelprozessen die Fasern aus verschiedenen Richtungen um den Wickelkern zugeführt werden. Die einzelnen Vorrichtungen zur Imprägnierung von Fasern werden dabei vorzugsweise so ausgerichtet, dass die Faser nach dem Verlassen der Einheit zur Einstellung des Faservolumengehalts zwischen der Vorrichtung zur Imprägnierung der Fasern und dem Wickelkern nicht mehr umgelenkt werden muss. Auf diese Weise wird sichergestellt, dass kein Matrixmaterial durch eine Umlenkvorrichtung, beispielsweise eine Rolle aus der Faser gedrückt wird sondern die Fasern mit dem Faservolumengehalt, mit dem diese die Vorrichtung zur Imprägnierung verlassen, auf den Wickelkern aufgewickelt werden.

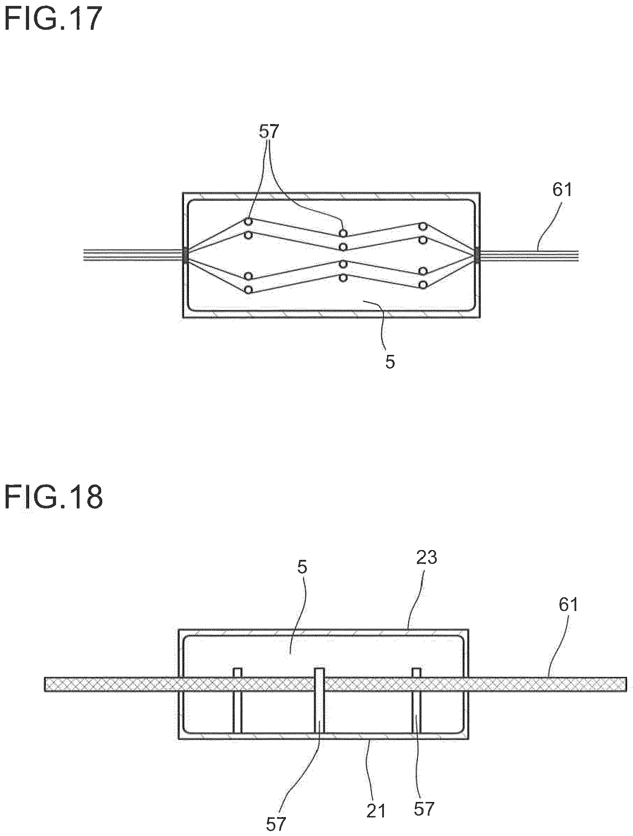

In den Figuren 17 und 18 ist eine Vorrichtung zur Imprägnierung von Faserbändern in Draufsicht und in Seitenansicht dargestellt. Die Funktionsweise der Vorrichtung entspricht dabei weitgehend der Funktionsweise der Vorrichtungen, wie sie in den Figuren 13 bis 16 dargestellt sind.

Auch die in den Figuren 17 und 18 dargestellte Vorrichtung weist vorzugsweise, wie die in den Figuren 15 und 16 dargestellte Vorrichtung ein Unterteil 21 und einen Deckel 23 auf, wobei die Öffnungen, durch die die Faserbänder 61 geführt werden, im Unterteil 21 ausgebildet sind und auf der Oberseite offen sind und nach dem Einlegen der Faserbänder 61 mit dem Deckel 23 verschlossen werden. Da die Faserbänder flach sind, weisen die Öffnungen im Unterteil in diesem Fall vorzugsweise einen rechteckigen Querschnitt auf, wobei die Höhe der Öffnung 59 zur Zufuhr der Faserbänder der Breite der Faserbänder 61 entspricht und die Breite der Öffnung 59 zur Zufuhr der Faserbänder der Dicke des zugeführten Stapels aus mehreren Faserbändern 61. Die Öffnung 107 der Einheit zur Einstellung des Faservolumengehalts ist ebenfalls vorzugsweise rechteckig, wobei sich hier die Querschnittsfläche wie vorstehend beschrieben abhängig vom gewünschten Faservolumengehalt berechnet.

Aufgrund der Geometrie ist es anders als bei Einzelfasern oder Einzelrovings oder auch Gruppen mit einer geringen Anzahl an Fasern bei Faserbändern 61 notwendig, dass sowohl die Umlenkelemente als auch die Abstreifer auf die breite Fläche des Faserbandes 61 wirken. Daher werden für die Imprägnierung von Faserbändern anders als bei den in den Figuren 13 bis 16 dargestellten Ausführungsformen keine Umlenkelemente und um 90° zu den Umlenkeinheiten 57 gedrehte Abstreifer eingesetzt sondern es werden für jedes Faserband 61 mindestens zwei, vorzugsweise mindestens drei Umlenkeinheiten 57 eingesetzt sind, die so positioniert sind, dass ein über die Umlenkeinheiten 57 geführtes Faserband 61 jeweils von einem Umlenkelement 57 gegen ein benachbartes Umlenkelement 57 gedrückt wird. Hierdurch ergibt sich eine Zick-Zack-Führung der Faserbänder 61 im Bad 5 und die Umlenkelemente 57 wirken gleichzeitig auch als Abstreifer. Eine solche Führung ist selbstverständlich alternativ auch für Einzelfasern, Gruppen aus einer geringen Anzahl an Fasern oder Einzelrovings möglich, wobei hier aufgrund des erforderlichen Platzbedarfs und des geringeren Montageaufwandes und Aufwandes zum Einlegen der Fasern bevorzugt ist, Umlenkelemente 57 und dazu um 90° gedrehte Abstreifer vorzusehen.

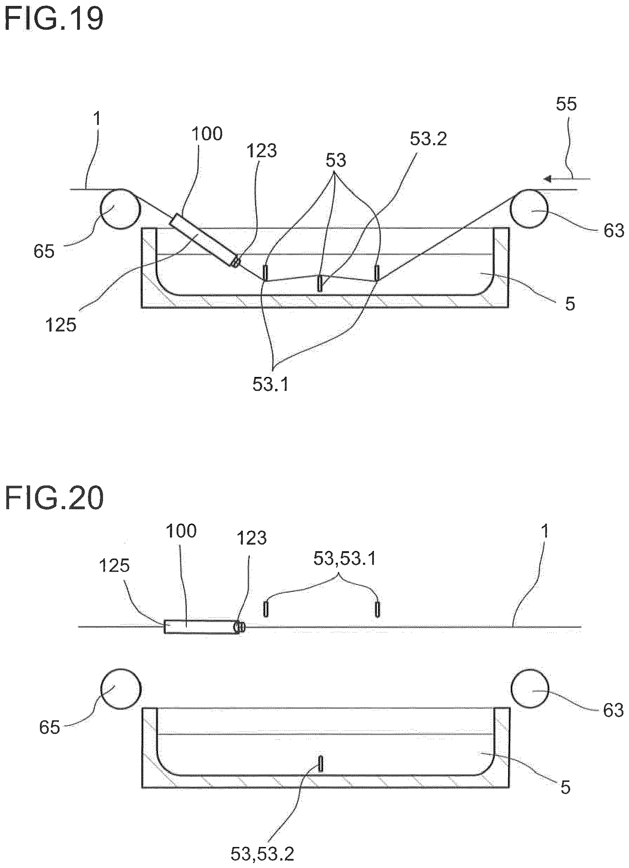

In den Figuren 19 und 20 ist eine weitere Ausführungsform einer Vorrichtung zum Imprägnieren von Fasern dargestellt. Figur 19 zeigt die Vorrichtung im laufenden Betrieb während des Imprägnierens und Figur 20 zeigt die Vorrichtung vor dem Einbringen der Fasern in das Bad.

Im Unterschied zu den in den Figuren 13 bis 18 dargestellten Vorrichtungen werden bei der in den Figuren 19 und 20 dargestellten Vorrichtung die Fasern 1 nicht durch eine Öffnung 59 zur Zuführung der Fasern 1, die sich im Betrieb unterhalb des Flüssigkeitsspiegels des Matrixmaterials befindet, in das Bad 5 geführt sondern über eine Umlenkrolle 63 von oben in das Bad 5 geführt. Damit die Fasern 1 nach der Umlenkrolle 63 in das Bad geführt werden, ist als erstes in Laufrichtung 55 der Fasern 1 ein Abstreifer 53.1 vorgesehen, der von oben auf die Fasern wirkt. Mit dem Abstreifer 53.1, der von oben auf die Fasern wirkt, werden die Fasern 1 nach dem Passieren der Umlenkrolle 63 in das Bad gedrückt. An den ersten Abstreifer 53.1, der von oben auf die Fasern 1 wirkt, schließen sich mindestens ein Abstreifer 53.2, der von unten auf die Fasern 1 wirkt und ein weiterer Abstreifer 53.1, der von oben auf die Fasern wirkt, an. Es können auch noch weitere Abstreifer vorgesehen sein, wobei der letzte Abstreifer 53 in Laufrichtung der Fasern 1 ein von oben auf die Fasern wirkender Abstreifer 53.1 ist. Nach dem letzten Abstreifer 53.1 werden die Fasern durch die Einrichtung zur Einstellung des Faservolumengehalts 100 geführt, die mit einer Seite in das Matrixmaterial eintaucht und mit dem anderen Ende, durch das die Fasern die Einrichtung zur Einstellung des Faservolumengehalts 100 verlassen, außerhalb des Matrixmaterials liegt. Im Anschluss an die Einrichtung zur Einstellung des Faservolumengehalts 100 werden die getränkten Fasern über eine weitere Umlenkrolle 65 geführt.

Anstelle der Umlenkrollen 63, 65, die in den Figuren 19 und 20 dargestellt sind, ist es auch möglich, beliebige andere geeignete Umlenkelemente einzusetzen, wie sie vorstehend als Umlenkeinheiten 35, 37 in den Figuren 7 bis 11 beschrieben sind.

Um den Faservolumengehalt der imprägnierten Fasern einzustellen, weist die Einheit zur Einstellung des Faservolumengehalts 100 in der hier dargestellten Ausführungsform eine Düse 123 und einen Kanal 125 auf. Die Düse weist die minimale Querschnittsfläche auf, die so dimensioniert ist, dass der gewünschte Faservolumengehalt erreicht wird. An die Düse 123 schließt sich der Kanal 125 an, wobei der Kanal 125 eine Querschnittsfläche aufweist, die so groß ist, dass die getränkten Fasern, die durch den Kanal 125 geführt werden, die Wandungen des Kanals nicht berühren. Um zu verhindern, dass Luftbläschen oder Gasbläschen beim Imprägnieren in die Fasern eingebracht werden, taucht die Einheit zur Einstellung des Faservolumengehalts 100 mit der Düse 123 in das Matrixmaterial im Bad 5 ein. Durch den sich an die Düse anschließenden Kanal 125 können die getränkten Fasern nach dem Passieren der Düse aus dem Matrixmaterial im Bad 5 geführt werden, ohne noch einmal mit dem Matrixmaterial in Kontakt zu kommen, so dass sich der Faservolumengehalt nach dem Passieren der Düse nicht mehr ändert. Hierzu ist der Kanal 125 flüssigkeitsdicht mit der Düse verbunden, so dass aus dem Bad 5 kein Matrixmaterial in den Kanal 125 gelangen kann. Das Ende des Kanals 125, durch das die Fasern austreten, befindet sich im Betrieb außerhalb des Matrixmaterials.

Um die Fasern auf einfache Weise in die Vorrichtung zur Imprägnierung von Fasern einlegen zu können, sind die von oben auf die Fasern wirkenden Abstreifer 53.1 und die Einheit zur Einstellung des Faservolumengehalts 100 vorzugsweise aus dem Bad 5 entnehmbar montiert. Dies ist schematisch in Figur 20 dargestellt, in der die Vorrichtung vor dem Einlegen der Fasern 1 gezeigt ist. Die zu imprägnierenden Fasern 1 befinden sich zunächst außerhalb des Matrixmaterials oberhalb des Bades 5. Als erstes werden die Fasern 1 in die Einheit zur Einstellung des Faservolumengehalts 100 eingelegt. Die Abstreifer 53.1, die von oben auf die Fasern 1 wirken befinden sich ebenfalls noch außerhalb des Bades 5. Nachdem die Fasern 1 in die Einheit zur Einstellung des Faservolumengehalts 100 eingelegt worden sind, werden diese mit den von oben auf die Fasern 1 wirkenden Abstreifer 53.1 nach unten gedrückt. Hierzu können die Abstreifer 53.1 zum Beispiel in einer Nut in dem das Bad 5 enthaltenden Behälter geführt werden oder alternativ mit einem Träger an der Oberkante des das Bad 5 enthaltenden Behälters montiert werden. Damit die Einheit zur Einstellung des Faservolumengehalts 5 so positioniert werden kann, dass diese mit einer Seite, vorzugsweise der die Düse 123 aufweisenden Seite in das im Bad enthaltene Matrixmaterial eintauchen kann und das andere Ende der Einheit zur Einstellung des Faservolumengehalts 100, aus dem die imprägnierten Fasern wieder austreten außerhalb des Matrixmaterials ist, ist die Einheit zur Einstellung des Faservolumengehalts vorzugsweise beweglich an einer geeigneten Halterung montiert, mit der die Einheit zur Einstellung des Faservolumengehalts 100 an dem das Bad 5 enthaltenden Behälter montiert werden kann.

Diese in den Figuren 19 und 20 gezeigte Vorrichtung hat den Vorteil, dass wie auch bei den in den Figuren 7 bis 12 gezeigten Vorrichtungen die Fasern auf einfache Weise eingelegt werden können ohne das Matrixmaterial aus dem Bad 5 entfernen zu müssen.

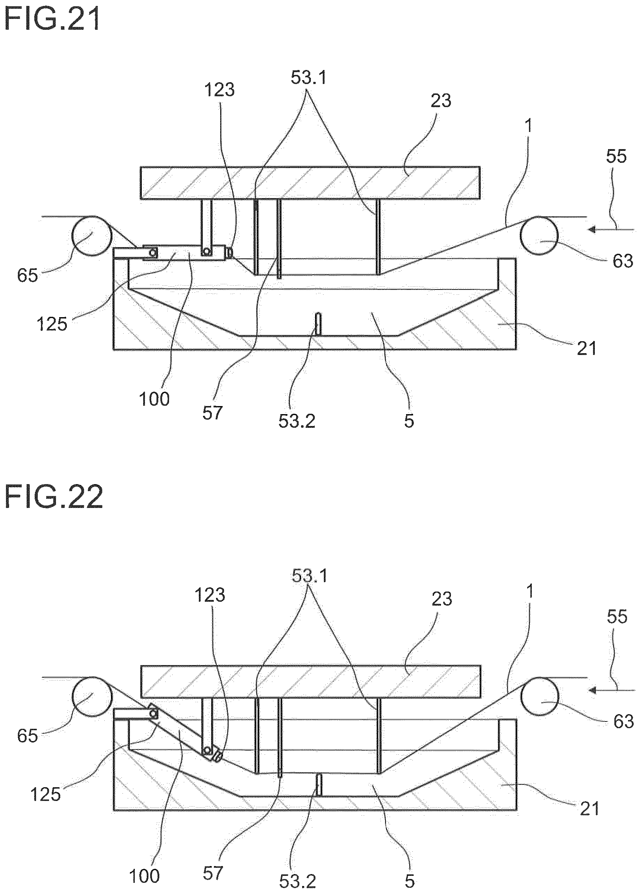

Eine Variante, wie die Abstreifer 53.1, die von oben auf die Fasern wirken und die Einheit zur Einstellung des Faservolumengehalts 100 montiert werden können, ist in den Figuren 21 und 22 dargestellt. Hier sind die Abstreifer 53.1 und die Einheit zur Einstellung des Faservolumengehalts 100 an einem Deckel 23 befestigt, der auf das das Bad 5 enthaltende Unterteil 21 aufgesetzt wird. In Figur 1 die diese Ausführungsform mit teilgeöffnetem Deckel und in Figur 22 mit geschlossenem Deckel gezeigt.

Die Einheit zur Einstellung des Faservolumengehalts ist dabei mit einem ersten Arm 127 am Deckel 21 und mit einem zweiten Arm 129 am Unterteil 21 montiert. Der erste Arm 127 und der zweite Arm 129 sind jeweils um eine senkrecht zu den Fasern 1 verlaufenden Achse drehbar am Kanal 125 der Einheit zur Einstellung des Faservolumengehalts 100 befestigt. Hierdurch wird die Einheit zur Einstellung des Faservolumengehalts 100 beim Schließen des Deckels 23 in die gewünschte Position gebracht. Mit den am Deckel 21 befestigten und von oben auf die Fasern 1 wirkenden Abstreifern 53.1 werden die Fasern in das Matrixmaterial im Bad 5 gedrückt, wobei bei geschlossenem Deckel die Fasern durch die von oben auf die Fasern 1 wirkenden Abstreifer 53.1 gegen einen von unten auf die Fasern 1 wirkenden Abstreifer 53.2 gedrückt werden. Der von unten auf die Fasern 1 wirkende Abstreifer ist dabei am Unterteil 21 befestigt.

Bei der in den Figuren 19 bis 22 gezeigten Ausführungsformen können die Fasern als Faserbündel oder als Bündel aus mehreren Einzelrovings zugeführt werden und im Bad 5 in Einzelfasern, Einheiten aus einer geringeren Anzahl an Fasern oder Einzelrovings aufgeteilt werden, um die Fasern vollständig tränken zu können, wobei die Fasern oder Rovings nach dem Tränken wieder zusammengeführt werden, bevor diese durch die Einheit zur Einstellung des Faservolumengehalts geführt werden. Die Aufteilung kann dabei, wie bereits für die in den Figuren 13 bis 16 beschriebenen Ausführungsformen durch den Einsatz von Umlenkeinheiten 57 erfolgen, um die die Einzelfasern, Einheiten aus einer geringeren Anzahl an Fasern oder Rovings geführt werden.

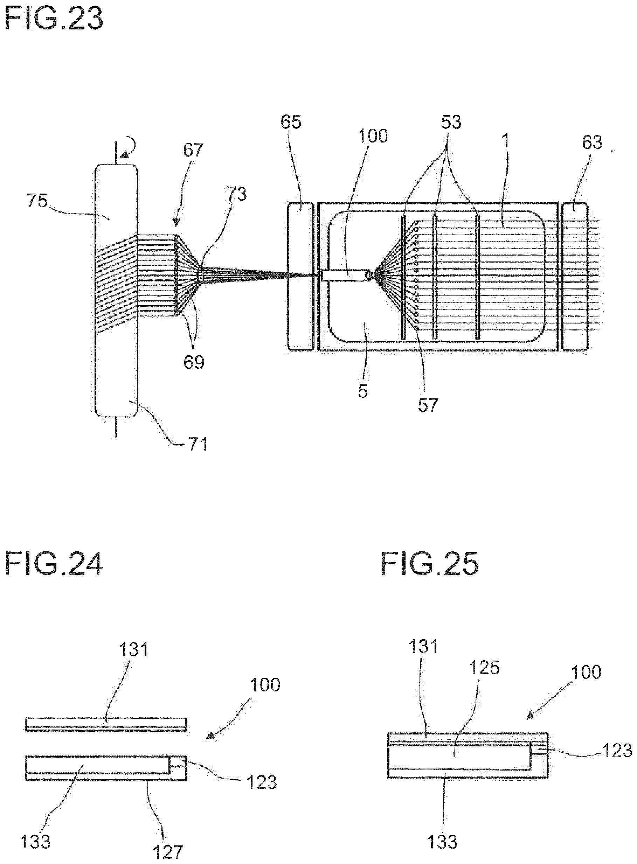

Alternativ ist es bei den in den Figuren 19 bis 22 gezeigten Ausführungsformen auch möglich, die Fasern bereits aufgeteilt in Einzelfasern, Einheiten aus einer geringen Anzahl an Fasern oder Einzelrovings zuzuführen, vor dem Eintritt in die Einheit zur Einstellung des Faservolumengehalts 100 zusammenzuführen und so als Bündel der Vorrichtung zur Imprägnierung von Fasern zu entnehmen. Eine solche Ausführungsform ist beispielhaft in Figur 23 in Draufsicht dargestellt.

Insbesondere, wenn die imprägnierten Fasern zur Herstellung von gewickelten Bauteilen, beispielsweise Rohren, eingesetzt werden, ist es notwendig, die Fasern nach dem Imprägnieren wieder auf Einzelfasern, Gruppen aus wenigen Fasern oder Einzelrovings aufzuteilen, die dann einem Wickeldorn zugeführt werden, um den die imprägnierten Fasern zur Herstellung des gewickelten Bauteils eingesetzt werden. Diese Aufteilung der Fasern nach dem Imprägnieren ist beispielhaft ebenfalls in Figur 23 dargestellt, kann jedoch auch für alle anderen hier gezeigten Ausführungsformen so durchgeführt werden.

Nach dem Austritt aus der Einheit zur Einstellung des Faservolumengehalts 100 werden die Fasern 1 zunächst durch eine Führung 73 geführt und anschließend einem Kamm 67 zugeführt. Im Kamm 67 werden die Einzelfasern, Einheiten aus einer geringen Anzahl an Fasern oder Einzelrovings jeweils um einen Zinken 69 des Kamms 67 geführt, so dass diese anschließend parallel nebeneinanderliegend dem Wickeldorn 71 oder Wickelkern zugeführt werden können, um den die Fasern dann parallel nebeneinliegend gewickelt werden. Zur Herstellung des Bauteils wird entweder der Wickeldorn 71 oder Wickelkern entlang seiner Achse 75 vor und zurück bewegt oder der Kamm 67 wird parallel zur Achse 75 des Wickeldorns 71 oder Kamms hin und her bewegt, um so ein Bauteil mit mehreren Faserlagen, die in einem Winkel zueinander gedreht übereinander liegen herzustellen. Der Winkel, mit dem die Fasern der einzelnen Lagen zueinander gedreht sind, wird dabei über die Drehgeschwindigkeit des Wickeldorns 71 oder Wickelkerns und die Vor- und Rückbewegung des Wickeldorns 71 oder Wickelkerns beziehungsweise die Hin- und Her-Bewegung des Kamms 67 eingestellt.

Um bei einer Vorrichtung, wie sie in den Figuren 19 bis 23 in mehreren Ausführungsformen dargestellt ist, die Fasern einfach einlegen zu können, ist es besonders vorteilhaft, wenn die Einheit zur Einstellung des Faservolumengehalts 100 zweiteilig ausgeführt ist. Dies ist beispielhaft in den Figuren 24 und 25 gezeigt. Hierzu weist die Einheit zur Einstellung des Faservolumengehalts ein Unterteil 133 und einen Deckel 131 auf. Die Düse 123 ist im Unterteil 133 ausgebildet und so positioniert, dass diese bei geöffnetem Deckel 131 nach oben offen ist. So können bei geöffnetem Deckel 131 die Fasern auf einfache Weise in das Unterteil 133 eingelegt werden und nach dem Einlegen der Fasern 1 wird der Deckel geschlossen.

Um bei einem Verfahren, bei dem die Fasern nach dem Imprägnieren wieder aufgeteilt werden sollen, zu verhindern, dass die Fasern verknoten und es so zu einem ungewollten Ausfall der Vorrichtung kommt, ist bei allen Ausführungsformen vorteilhaft, dass die Fasern zunächst auf einfache Weise von oben eingelegt werden können, bevor die Fasern 1 in das Matrixmaterial im Bad 5 gedrückt werden. Ein Verheddern der Fasern wird dabei dadurch verhindert, dass zunächst die Fasern durch die Zwischenräume zwischen den Zinken 69 des Kamms 67 und über den Kamm 7 vor der Vorrichtung zur Imprägnierung der Fasern geführt werden. Unabhängig davon ob die Fasern als Einzelfasern, als Gruppe von wenigen Fasern oder als Einzelrovings zugeführt werden, wie dies in Figur 23 dargestellt ist, oder als Bündel durch eine Öffnung 59 zur Zufuhr von Fasern oder auch als Bündel über eine Umlenkeinheit 35, 63 werden die Fasern als nächstes um die Umlenkeinheiten 57 im Bad 5 gelegt. Daran anschließend werden die Fasern zwischen den Umlenkeinheiten 57 im Bad 5 und dem Kamm 67 zusammengefasst und in die Einheit zur Einstellung des Faservolumengehalts 100 eingelegt, die hierzu vorzugsweise zweiteilig mit einem Oberteil 101 und einem Unterteil 103 oder einem Unterteil 133 und einem Deckel 131 ausgeführt ist, so dass die Fasern in das Unterteil 103, 133 eingelegt werden können und anschließend das Oberteil 101 oder der Deckel 131 aufgesetzt wird. Wenn die Führung 73 vorgesehen ist, die insbesondere bei der Ausführung der Einheit zur Einstellung des Faservolumengehalts mit Düse 123 und Kanal 125 eingesetzt wird, um zu verhindern, dass die Fasern die Wandung des Kanals 125 berühren, wodurch Matrixmaterial abgestreift werden kann, wird diese ebenfalls bevorzugt erst nach dem Einlegen der Fasern in den Kamm 67 und dem Legen der Fasern 1 um die Umlenkeinheiten 57 eingesetzt, wozu die Führung 73 vorzugsweise ebenfalls zweiteilig ausgeführt ist, so dass diese geöffnet um die Fasern 1 gelegt und anschließend geschlossen werden kann. Bei einer zweiteiligen Ausführung ist neben getrenntem Oberteil und Unterteil oder Unterteil und Deckel auch immer möglich, dass Unterteil und Oberteil oder Unterteil und Deckel mit einem Scharnier verbunden sind, so dass der Deckel zum Schließen um die Achse des Scharniers gedreht wird.

Wenn die Fasern durch eine Öffnung 59 zur Zufuhr der Fasern geführt werden, werden die Fasern nach dem Einlegen in die Einheit zur Einstellung des Faservolumengehalts zwischen den Umlenkeinheiten 57 im Bad 5 und dem Kamm 7 zusammengefasst und in die Öffnung 59 zur Zufuhr der Fasern 1 eingelegt, die dann nach dem vollständigen Einlegen der Fasern zum Beispiel durch Schließen des Deckels 23 verschlossen wird. Selbstverständlich ist es hier auch möglich, zuerst die Fasern in die Öffnung 59 zur Zufuhr der Fasern einzulegen und danach in die Einheit zur Einstellung des Faservolumengehalts 100.

Abhängig von der Anzahl der zu imprägnierenden Fasern und der Anzahl der Fasern, die durch die Einheit zur Einstellung des Faservolumengehalts 100 geführt werden sollen, können neben den hier dargestellten Ausführungsformen mit nur einer Einheit zur Einstellung des Faservolumengehalts 100 auch beliebig viele weitere Einheiten zur Einstellung des Faservolumengehalts eingesetzt werden. Hierbei ist es sowohl möglich, mehrere Einheiten zur Einstellung des Faservolumengehalts 100 an einem Bad 5 einzusetzen oder alternativ auch mehrere Vorrichtungen zur Imprägnierung von Fasern 1 mit jeweils einer Einheit zur Einstellung des Faservolumengehalts parallel zu verwenden.

### Bezugszeichenliste

| | | | |
|---|---|---|---|
| 1 | Fasern | 75 | Achse des Wickeldorns |
| 3 | Vorrat | | |
| 5 | Bad | 100 | Einheit zur Einstellung des Faservolumengehalts |
| 7 | Kamm | | |
| 9 | Abstreifwalzenpaar | 101 | Oberteil |
| 11 | Führungsring | 103 | Unterteil |
| 13 | Spindel | 105 | Aussparung |
| 15 | Bauteil | 107 | Öffnung |
| 21 | Unterteil | 109 | Rand der Öffnung |
| 23 | Deckel | 111 | minimaler Öffnungsquerschnitt |
| 25 | geneigte Fläche | 113 | Seitenfläche |
| 27 | Abstreifer | 115 | halbkreisförmige Basis |
| 29 | Abstreifkante | 117 | Platte |
| 31 | Abstreifer | 119 | Platte |
| 33 | Umlenkeinheit | 121 | Lamellenblende |
| 35 | erste Umlenkeinheit am Unterteil 21 | 123 | Düse |
| 37 | zweite Umlenkeinheit am Unterteil 21 | 125 | Kanal |
| 39 | Spalt | 127 | erster Arm |
| 41 | zweiter Spalt | 129 | zweiter Arm |

(fortgesetzt)

| | | | |
|---|---|---|---|
| 43 | Abstreifwalze | 131 | Deckel |
| 45 | erste am Deckel 23 montierte Umlenkeinheit | 133 | Unterteil |
| 47 | zweite am Deckel 23 montierte Umlenkeinheit | | |
| 49 | zusätzliche Umlenkeinheit im Bad 5 | | |
| 51 | Umlenkeinheit | | |
| 53 | Abstreifer | | |
| 53.1 | von oben auf die Fasern wirkender Abstreifer | | |
| 53.2 | von unten auf die Fasern wirkender Abstreifer | | |
| 55 | Laufrichtung | | |
| 57 | Umlenkeinheit | | |
| 59 | Öffnung zur Zufuhr der Fasern 1 | | |
| 61 | Faserband | | |
| 63 | Umlenkrolle | | |
| 65 | Umlenkrolle | | |
| 67 | Kamm | | |
| 69 | Zinken | | |
| 71 | Wickeldorn | | |
| 73 | Führung | | |

## Patentansprüche

1. Vorrichtung zur Imprägnierung von Fasern (1) mit einem Matrixmaterial, umfassend eine Einheit zum Tränken der Fasern mit dem Matrixmaterial, und eine Einheit zur Einstellung des Faservolumengehalts (100), die mindestens eine Öffnung (107) umfasst, durch die die getränkten Fasern (1) geführt werden, wobei jede Öffnung (107) an ihrem minimalen Öffnungsquerschnitt (111) so dimensioniert ist, dass so viel Matrixmaterial entfernt wird, dass der gewünschte Faservolumengehalt erreicht wird **dadurch gekennzeichnet, dass** die Einheit zur Einstellung des Faservolumengehalts (100) ein Oberteil (101; 131) und ein Unterteil (103; 133) umfasst und die Öffnung (107) jeweils zum Teil im Unterteil (103, 133) und zum Teil im Oberteil (101; 131) ausgebildet ist.

2. Vorrichtung gemäß Anspruch 1, **dadurch gekennzeichnet, dass** die Querschnittsfläche der mindestens einen Öffnung (107) in der Einheit zur Einstellung des Faservolumengehalts (100) in Laufrichtung der Fasern im Betrieb kleiner wird und/oder jede Öffnung (107) in der Einheit zur Einstellung des Faservolumengehalts (100) eine maximale Breite und eine maximale Höhe aufweist, die jeweils mindestens dem Durchmesser eines Rovings entsprechen.

3. Vorrichtung gemäß Anspruch 1 oder 2, **dadurch gekennzeichnet, dass** jede Öffnung (107) in der Einheit zur Einstellung des Faservolumengehalts (100) einstellbar ist.

4. Vorrichtung gemäß einem der Ansprüche 1 bis 3, **dadurch gekennzeichnet, dass** die Einheit zur Einstellung des Faservolumengehalts (100) ein Oberteil (101) und ein Unterteil (103) umfasst, die jeweils eine Aussparung (105) aufweisen, wobei sich bei montierter Einheit zur Einstellung des Faservolumengehalts (100) die Aussparung (105) im Unterteil (103) und die Aussparung im Oberteil (101) überschneiden und so die Öffnung (107) bilden und der Öffnungsquerschnitt durch die Position des Oberteils (101) zum Unterteil (103) einstellbar ist, wobei vorzugsweise eine Abtropfeinheit mit mindestens einem Abstreifer (27) mit Abstreifkante (29) über die die getränkten Fasern im Betrieb geführt werden, umfasst ist.

5. Vorrichtung gemäß einem der Ansprüche 1 bis 4, **dadurch gekennzeichnet, dass** die Einheit zum Tränken der Fasern ein Bad zur Aufnahme des Matrixmaterials umfasst, wobei vorzugsweise die Vorrichtung ein Unterteil (21) umfasst, in der das Bad (5) aufgenommen ist sowie einen Deckel (23) zum Verschließen, wobei bei montiertem Deckel (23) zwischen dem Deckel (23) und dem Unterteil (21) an den Seiten, durch die die Fasern (1) in die Vorrichtung geführt werden und aus der Vorrichtung (1) austreten, jeweils ein Spalt (39, 41) ausgebildet ist.

6. Vorrichtung gemäß den Ansprüchen 4 und 5, **dadurch gekennzeichnet, dass** das Oberteil (101) der Einheit zur Einstellung des Faservolumengehalts (100) am Deckel (23) und das Unterteil (103) der Einheit zur Einstellung des Faservolumengehalts (100) am Unterteil (21) der Vorrichtung zur Imprägnierung angeordnet sind.

7. Vorrichtung gemäß Anspruch 5 oder 6, **dadurch gekennzeichnet, dass** das Unterteil (21) der Vorrichtung zur Imprägnierung eine in Richtung des Bades (5) geneigte Fläche (25) aufweist, über die von den Fasern (1) abtropfendes Matrixmaterial in das Bad (5) zurücklaufen kann.

8. Vorrichtung gemäß einem der Ansprüche 5 bis 7, **dadurch gekennzeichnet, dass** an dem Deckel (23) eine Umlenkeinheit (33; 45, 47) montiert ist, mit der die Fasern (1) bei montiertem Deckel (23) in das Bad (5) gedrückt werden.

9. Vorrichtung gemäß Anspruch 4 oder 5, **dadurch gekennzeichnet, dass** die Einheit zur Einstellung des Faservolumengehalts (100) so gestaltet und positioniert, dass diese mit der Seite, auf der die Fasern zugeführt werden, in das Bad (5) eintaucht und die Seite, auf der die Fasern aus der Einheit zur Einstellung des Faservolumens (100) austreten, außerhalb des Bades (5) liegt, wobei vorzugsweise die Einheit zur Einstellung des Faservolumengehalts (100) eine Düse (123) mit dem minimalen Querschnitt aufweist, die in das Matrixmaterial hineinragt, und einen sich an die Düse (123) anschließenden Kanal (125), durch den die getränkten Fasern geführt werden und der außerhalb des Matrixmaterials endet, oder wobei die Einheit zur Einstellung des Faservolumengehalts (100) in einer Wandung des Bades (5) ausgebildet ist.

10. Vorrichtung gemäß Anspruch 9, **dadurch gekennzeichnet, dass** in der Wandung des Bades (5) eine Öffnung zur Zufuhr der Fasern (1) ausgebildet ist und/oder dass im Bad (5) mindestens zwei Abstreifer (53) aufgenommen sind, die abwechselnd von oben und von unten auf die Fasern (1) wirken, wobei die Abstreifer (53) insbesondere so positioniert sind, dass deren Abstreifkanten im Betrieb unterhalb des Flüssigkeitsspiegels des Matrixmaterials liegen.

11. Vorrichtung gemäß einem der Ansprüche 1 bis 10, **dadurch gekennzeichnet, dass** im Bad Umlenkelemente (57) aufgenommen sind, um die die Fasern (1) geführt werden.

12. Vorrichtung gemäß einem der Ansprüche 1 bis 11, **dadurch gekennzeichnet, dass** ein Zulauf und ein Ablauf für ein Spülgas umfasst sind und/oder ein Anschluss für die Zufuhr von Matrixmaterial umfasst ist.

13. Verfahren zur Einstellung des Faservolumengehalts beim Imprägnieren von Fasern (1) in einer Vorrichtung gemäß einem der Ansprüche 1 bis 12, folgende Schritte umfassend:

(a) Tränken der Fasern (1) mit einem Matrixmaterial,
(b) Durchführen der getränkten Fasern (1) durch die mindestens eine Öffnung (107) der Einrichtung zur Einstellung des Faservolumengehalts (100), wobei mindestens zwei Fasern (1) durch jede Öffnung (107) der Einheit zur Einstellung des Faservolumengehalts (100) geführt werden und jede Öffnung (107) eine minimale Querschnittsfläche (111) aufweist, die folgende Beziehung erfüllt:

$$A = \frac{n \cdot Tex}{\varphi \cdot \rho}$$

mit

  - n = Anzahl der Fasern, die im Betrieb durch die Öffnung geführt werden,
  - Tex = Texzahl der Fasern in g/1000m
  - $\varphi$ = Faservolumengehalt
  - $\rho$ = Dichte der Fasern.

14. Verfahren gemäß Anspruch 13, **dadurch gekennzeichnet, dass** die Fasern (1) Kohlenstofffasern, Glasfasern oder Aramidfasern sind und/oder dass das Matrixmaterial ausgewählt ist aus ungesättigten Polyesterharzen, Vinylestern, Epoxidharzen und Polyurethanen und deren Edukten.

15. Verfahren gemäß Anspruch 13 oder 14, **dadurch gekennzeichnet, dass** die Fasern vor Zufuhr in das Matrixmaterial oder nach Zufuhr in das Matrixmaterial durch eine Öffnung (59) in der Wandung eines Bades (5), das das Matrixmaterial enthält, in Einzelfasern, Gruppen aus weniger Fasern oder Einzelrovings aufgeteilt werden, um Umlenkelemente (57) geführt werden und nach den Umlenkelementen wieder gebündelt werden und der Einheit zur Einstellung des Faservolumengehalts (100) zugeführt werden und/oder im Bad Abstreifer (53) vorgesehen sind, über die die Fasern (1) geführt werden, wobei die Abstreifkanten der Abstreifer (53) unterhalb des Flüssigkeitsspiegels des Matrixmaterials liegen.

**Claims**

1.  An apparatus for impregnating fibers (1) with a matrix material, comprising a unit for soaking the fibers with the matrix material and a unit for setting the fiber content by volume (100) which comprises at least one opening (107) by way of which the soaked fibers (1) are guided, where each opening (107) at the minimum opening cross section (111) thereof is dimensioned such that so much matrix material is removed that the desired fiber content by volume is achieved, wherein the unit for setting the fiber content by volume (100) comprises an upper part (101; 131) and a lower part (103; 133), and the opening (107) is in each case partially configured in the lower part (103, 133) and partially in the upper part (101; 131).

2.  The apparatus according to claim 1, wherein the cross-sectional area of the at least one opening (107) in the unit for setting the fiber content by volume (100) decreases in size in the running direction of the fibers during operation, and/or each opening (107) in the unit for setting the fiber content by volume (100) has a maximum width and a maximum height, each corresponding to at least the diameter of a roving.

3.  The apparatus according to claim 1 or 2, wherein each opening (107) in the unit for setting the fiber content by volume (100) is adjustable.

4.  The apparatus according to one of claims 1 to 3, wherein the unit for setting the fiber content by volume (100) comprises an upper part (101) and a lower part (103), each having one clearance (105), where in the case of the unit for setting the fiber content by volume (100) being fitted, the clearance (105) in the lower part (103) and the clearance in the upper part (101) coincide with one another, thus forming the opening (107), and the opening cross section is adjustable by the mutual relative position of the upper part (101) and the lower part (103), where a drip unit having at least one wiper (27) having a wiping edge (29) by way of which the soaked fibers are guided during operation is preferably included.

5.  The apparatus according to one of claims 1 to 4, wherein the unit for soaking the fibers comprises a bath for receiving the matrix material, where the apparatus preferably comprises a lower part (21) in which the bath (5) is received, and a lid (23) for closing, where in the case of the lid (23) being fitted, one gap (39, 41) is in each case configured between the lid (23) and the lower part (21) on those sides through which the fibers (1) are guided into the apparatus and exit from the apparatus (1).

6.  The apparatus according to claims 4 and 5, wherein the upper part (101) of the unit for setting the fiber content by volume (100) is disposed on the lid (23), and the lower part (103) of the unit for setting the fiber content by volume (100) is disposed on the lower part (21) of the apparatus for impregnating.

7.  The apparatus according to claim 5 or 6, wherein the lower part (21) of the apparatus for impregnating has a face (25) that is inclined in the direction of the bath (5), matrix material dripping from the fibers (1) being able to run back into the bath (5) by way of said inclined face (25).

8.  The apparatus according to one of claims 5 to 7, wherein a deflection unit (33; 45, 47) by way of which the fibers (1) in the case of the lid (23) being fitted are pushed into the bath (5) is fitted to the lid (23).

9.  The apparatus according to claim 4 or 5, wherein the unit for setting the fiber content by volume (100) is designed and positioned such that said unit by way of that side at which the fibers are supplied is immersed in the bath (5), and the side at which the fibers exit from the unit for setting the fiber volume (100) is outside the bath (5), where the unit for setting the fiber content by volume (100) preferably has a nozzle (123) which has the minimum cross section and protrudes into the matrix material, and a duct (125) which adjoins the nozzle (123) and through which the soaked fibers are guided and which terminates outside the matrix material, or where the unit for setting the fiber content by volume (100) is configured in a wall of the bath (5).

10. The apparatus according to claim 9, wherein an opening for supplying the fibers (1) is configured in the wall of the bath (5), and/or wherein at least two wipers (53) which act in an alternating manner from above and from below on the fibers (1) are received in the bath (5), where the wipers (53) are in particular positioned such that the wiping edges thereof, during operation, lie below the liquid level of the matrix material.

11. The apparatus according to one of claims 1 to 10, wherein deflection elements (57) about which the fibers (1) are guided are received in the bath.

12. The apparatus according to one of claims 1 to 11, wherein an inflow and an outflow for a flushing gas are included, and/or a connector for the supply of matrix material is included.

13. A method for setting the fiber content by volume when impregnating fibers (1) in an apparatus according to one of claims 1 to 12, said method comprising the following steps:

(a) soaking the fibers (1) with a matrix material,
(b) guiding the soaked fibers (1) through the at least one opening (107) of the installation for setting the fiber content by volume (100), where at least two fibers (1) are guided through each opening (107) of the unit for setting the fiber content by volume (100), and each opening (107) has a minimum cross-sectional area (111) which meets the following correlation:

$$A = \frac{n \cdot Tex}{\varphi \cdot \rho}$$

where

- n = number of fibers which during operation are guided through the opening,
- Tex = the fiber count Tex in g/1000 m
- $\varphi$ = fiber content by volume
- $\rho$ = density of the fibers.

14. The method according to claim 13, wherein the fibers (1) are carbon fibers, glass fibers or aramid fibers, and/or wherein the matrix material is selected from non-saturated polyester resins, vinyl esters, epoxy resins, and polyurethanes, and the reactants thereof.

15. The method according to claim 13 or 14, wherein the fibers, prior to being supplied to the matrix material or after being supplied to the matrix material through an opening (59) in the wall of a bath (5) that contains the matrix material, are divided into individual fibers, groups of fewer fibers, or individual rovings, are guided about deflection elements (57) and after the deflection elements are bundled again and are supplied to the unit for setting the fiber content by volume (100), and/or wipers (53) by way of which the fibers (1) are guided are provided in the bath, where the wiping edges of the wipers (53) lie below the liquid level of the matrix material.

**Revendications**

1. Dispositif pour l'imprégnation de fibres (1) avec un matériau de matrice, comprenant une unité pour l'imbibition des fibres avec le matériau de matrice, et une unité pour l'ajustement de la teneur volumique en fibres (100), qui comprend au moins une ouverture (107), à travers laquelle les fibres imbibées (1) sont acheminées, chaque ouverture (107) étant dimensionnée au niveau de sa section transversale d'ouverture minimale (111) de telle sorte que suffisamment de matériau de matrice est éliminé pour atteindre la teneur volumique en fibres souhaitée, **caractérisé en ce que** l'unité pour l'ajustement de la teneur volumique en fibres (100) comprend une partie supérieure (101 ; 131) et une partie inférieure (103 ; 133), et l'ouverture (107) est formée à chaque fois en partie dans la partie inférieure (103, 133) et en partie dans la partie supérieure (101 ; 131).

2. Dispositif selon la revendication 1, **caractérisé en ce que** la surface de section transversale de l'au moins une ouverture (107) dans l'unité pour l'ajustement de la teneur volumique en fibres (100) devient plus petite dans la direction de déplacement des fibres en fonctionnement et/ou chaque ouverture (107) dans l'unité pour l'ajustement de la teneur volumique en fibres (100) présente une largeur maximale et une hauteur maximale, qui correspondent à chaque fois au moins au diamètre d'un stratifil.

3. Dispositif selon la revendication 1 ou 2, **caractérisé en ce que** chaque ouverture (107) dans l'unité pour l'ajustement de la teneur volumique en fibres (100) est ajustable.

4. Dispositif selon l'une quelconque des revendications 1 à 3, **caractérisé en ce que** l'unité pour l'ajustement de la teneur volumique en fibres (100) comprend une partie supérieure (101) et une partie inférieure (103), qui comprennent chacune un évidement (105), l'évidement (105) dans la partie inférieure (103) et l'évidement dans la partie supérieure (101) se chevauchant lorsque l'unité pour l'ajustement de la teneur volumique en fibres (100) est montée et formant ainsi l'ouverture (107), et la section transversale d'ouverture étant ajustable par la position de la partie supérieure (101) par rapport à la partie inférieure (103), une unité d'égouttement munie d'au moins une racle (27) ayant un bord de raclage (29), sur lequel les fibres imbibées sont acheminées en fonctionnement, étant de préférence comprise.

5. Dispositif selon l'une quelconque des revendications 1 à 4, **caractérisé en ce que** l'unité pour l'imbibition des fibres comprend un bain pour la réception du matériau de matrice, le dispositif comprenant de préférence une partie inférieure (21), dans laquelle le bain (5) est reçu, ainsi qu'un couvercle (23) pour la fermeture, une fente (39, 41) étant formée à chaque fois sur les côtés à travers lesquels les fibres (1) sont acheminées dans le dispositif et sortent du dispositif (1) entre le couvercle (23) et la partie inférieure (21) lorsque le couvercle (23) est monté.

6. Dispositif selon les revendications 4 et 5, **caractérisé en ce que** la partie supérieure (101) de l'unité pour l'ajustement de la teneur volumique en fibres (100) est agencée sur le couvercle (23) et la partie inférieure (103) de l'unité pour l'ajustement de la teneur volumique en fibres (100) est agencée sur la partie inférieure (21) du dispositif pour l'imprégnation.

7. Dispositif selon la revendication 5 ou 6, **caractérisé en ce que** la partie inférieure (21) du dispositif pour l'imprégnation comprend une surface (25) inclinée en direction du bain (5), par l'intermédiaire de laquelle le matériau de matrice s'égouttant des fibres (1) peut refluer dans le bain (5).

8. Dispositif selon l'une quelconque des revendications 5 à 7, **caractérisé en ce qu'**une unité de déviation (33 ; 45, 47) est montée sur le couvercle (23), avec laquelle les fibres (1) sont pressées dans le bain (5) lorsque le couvercle (23) est monté.

9. Dispositif selon la revendication 4 ou 5, **caractérisé en ce que** l'unité pour l'ajustement de la teneur volumique en fibres (100) est conçue et positionnée de telle sorte que celle-ci est immergée dans le bain (5) avec le côté sur lequel les fibres sont introduites et que le côté sur lequel les fibres sortent de l'unité pour l'ajustement du volume de fibres (100) se situe en dehors du bain (5), l'unité pour l'ajustement de la teneur volumique en fibres (100) comprenant de préférence une buse (123) ayant la section transversale minimale, qui fait saillie dans le matériau de matrice, et un canal (125) raccordé à la buse (123), à travers lequel les fibres imbibées sont acheminées et qui se termine en dehors du matériau de matrice, ou l'unité pour l'ajustement de la teneur volumique en fibres (100) étant formée dans une paroi du bain (5).

10. Dispositif selon la revendication 9, **caractérisé en ce qu'**une ouverture pour l'introduction des fibres (1) est formée dans la paroi du bain (5) et/ou **en ce qu'**au moins deux racles (53) sont reçues dans le bain (5), qui agissent en alternance depuis le haut et depuis le bas sur les fibres (1), les racles (53) étant notamment positionnées de telle sorte que leurs bords de raclage se situent en fonctionnement en dessous du niveau de liquide du matériau de matrice.

11. Dispositif selon l'une quelconque des revendications 1 à 10, **caractérisé en ce que** des éléments de déviation (57) sont reçus dans le bain, autour desquels les fibres (1) sont acheminées.

12. Dispositif selon l'une quelconque des revendications 1 à 11, **caractérisé en ce qu'**une alimentation et une évacuation pour un gaz de purge sont comprises et/ou un raccord pour l'introduction de matériau de matrice est compris.

13. Procédé d'ajustement de la teneur volumique en fibres lors de l'imprégnation de fibres (1) dans un dispositif selon l'une quelconque des revendications 1 à 12, comprenant les étapes suivantes :

(a) l'imbibition des fibres (1) avec un matériau de matrice,
(b) le passage des fibres imbibées (1) à travers l'au moins une ouverture (107) de l'appareil pour l'ajustement de la teneur volumique en fibres (100), au moins deux fibres (1) étant acheminées à travers chaque ouverture (107) de l'unité pour l'ajustement de la teneur volumique en fibres (100) et chaque ouverture (107) présentant une surface de section transversale minimale (111), qui satisfait la relation suivante :

$$A = \frac{n \cdot Tex}{\varphi \cdot \rho}$$

avec

- n = nombre de fibres qui sont acheminées à travers l'ouverture en fonctionnement,
- Tex = nombre de tex des fibres en g/1 000 m,
- $\varphi$ = teneur volumique en fibres,
- $\rho$ = masse volumique des fibres.

**14.** Procédé selon la revendication 13, **caractérisé en ce que** les fibres (1) sont des fibres de carbone, des fibres de verre ou des fibres d'aramide, et/ou **en ce que** le matériau de matrice est choisi parmi les résines de polyester insaturées, les esters de vinyle, les résines d'époxyde et les polyuréthanes et leurs réactifs.

**15.** Procédé selon la revendication 13 ou 14, **caractérisé en ce que** les fibres sont réparties, avant l'introduction dans le matériau de matrice ou après l'introduction dans le matériau de matrice, à travers une ouverture (59) dans la paroi d'un bain (5), qui contient le matériau de matrice, en fibres individuelles, en groupes de quelques fibres ou en stratifils individuels, acheminées autour d'éléments de déviation (57) et de nouveau regroupées après les éléments de déviation et introduites dans l'unité pour l'ajustement de la teneur volumique en fibres (100), et/ou des racles (53) sont prévues dans le bain, sur lesquelles les fibres (1) sont acheminées, les bords de raclage des racles (53) se situant en dessous du niveau de liquide du matériau de matrice.

## FIG.1a

## FIG.1b

## FIG.2a

## FIG.2b

# FIG.3a

# FIG.3b

# FIG.3c

FIG.4a

117

105

119

105

FIG.4b

117, 119

105

105

107

FIG.5

121

107

FIG.6

FIG.7

EP 3 661 711 B1

FIG.8

FIG.9

30

FIG.10

FIG.11

FIG.12

## FIG.13

## FIG.14

## FIG.15

## FIG.16

FIG.17

FIG.18

FIG.19

FIG.20

FIG.21

FIG.22

# FIG.23

# FIG.24

# FIG.25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2433965 A
- US 4267007 A
- US 4937028 A
- US 5766357 A
- WO 2007062516 A
- US 5747075 A
- US 5084305 A
- US 7413623 B
- WO 0196077 A
- US 3231414 A
- WO 2017053251 A

**In der Beschreibung aufgeführte Nicht-Patentliteratur**

- **A. MIARIS et al.** Modeling the Impregnation Process of a Siphon Impregnation System during Filament Winding. *Proceedings of the ASME 2011 Pressure Vessels and Piping Division Conference, PVP2011,* Juli 2011